# EUROPEAN PATENT SPECIFICATION

(11) **EP 3 834 542 B1**
(45) Date of publication and mention of the grant of the patent: **15.01.2025**
(21) Application number: 19752179.2
(22) Date of filing: 07.08.2019
(51) Int. Cl.: H04W 72/23, H04W 72/0453

(54) **CONTIGUOUS UPLINK FREQUENCY RESOURCE ALLOCATION TO A GROUP OF WIRELESS DEVICES**
ZUWEISUNG ANGRENZENDER UPLINK-FREQUENZ-RESSOURCEN ZU EINER GRUPPE VON DRAHTLOSEN VORRICHTUNGEN
ATTRIBUTION DE RESSOURCES CONTIGUËS DE FRÉQUENCE EN LIAISON MONTANTE À UN GROUPE DE DISPOSITIFS SANS FIL

(30) Priority: 09.08.2018 US 201862716743 P
(43) Date of publication of application: 16.06.2021
(73) Proprietor: Telefonaktiebolaget LM Ericsson (publ), 164 83 Stockholm (SE)
(72) Inventor: FRÖBERG OLSSON, Jonas, 590 74 Ljungsbro (SE); DUDDA, Torsten, 41849 Wassenberg (DE); ZOU, Zhenhua, 171 42 Solna (SE); DIACHINA, John Walter, Garner, North Carolina 27529 (US)
(74) Representative: Ericsson
(86) International application number: PCT/EP2019/071220
(87) International publication number: WO 2020/030693

(56) References cited:
- WO-A1-2011/109290
- WO-A1-2011/109290
- WO-A1-2018/019085
- WO-A1-2018/019085
- LG ELECTRONICS: "Discussion on resource allocation and TBS determination", vol. RAN WG1, no. Reno, USA; 20171127 - 20171201, 18 November 2017 (2017-11-18), XP051369642, Retrieved from the Internet <URL:http://www.3gpp.org/ftp/tsg%5Fran/WG1%5FRL1/TSGR1%5F91/Docs/> [retrieved on 20171118]
- LG ELECTRONICS: "Discussion on resource allocation and TBS determination", vol. RAN WG1, no. Reno, USA; 20171127 - 20171201, 18 November 2017 (2017-11-18), XP051369642, Retrieved from the Internet <URL:http://www.3gpp.org/ftp/tsg%5Fran/WG1%5FRL1/TSGR1%5F91/Docs/> [retrieved on 20171118]

## Description

### TECHNICAL FIELD

The present application relates generally to a wireless communication system, and relates more particularly to uplink frequency-resource allocation for a group of wireless devices in such a wireless communication system.

### BACKGROUND

Some wireless communication systems, like Long Term Evolution (LTE) and New Radio (NR), use Single-Carrier Frequency Division Multiple Access (SC-FDMA) for multiple access in the uplink. The low peak-to-average power ratio (PAPR) provided by SC-FDMA makes its use in the uplink particularly attractive for increasing uplink coverage while reducing wireless device power consumption.

SC-FDMA and other multiple access schemes in some cases benefit from use over a contiguous frequency allocation, i.e., the allocation of frequency resources with no gaps between the starting resource and the ending resource. Individual wireless devices in this case should ideally be given respective contiguous allocations that are right next to one another, so that their allocations are collectively contiguous. Avoiding fragmented or scattered frequency-resource allocations in this way produces a large contiguous portion of unused frequency from which still other wireless devices can be given contiguous frequency allocations that are as large as the devices need. This may prove particularly important, for instance, for supporting both latency-critical traffic (e.g., ultra-reliable low-latency communication, URLLC) and mobile broadband traffic (e.g., enhanced Mobile Broadband, eMBB). Indeed, robustness requirements of latency-critical traffic may effectively prevent latency-critical traffic and mobile broadband traffic from time-sharing the same frequency resources, meaning that fragmentation of frequency resources used for latency-critical traffic threatens to limit the frequency bandwidth usable for mobile broadband traffic. This in turn jeopardizes the throughput of mobile broadband traffic.

Keeping different wireless devices' individual frequency allocations close to one another (e.g. such that they are contiguous) proves complicated in these and other cases, especially as the different devices' frequency allocation needs change (e.g., due to the devices' channel conditions changing). Changing the devices' frequency allocations so that they stay close to one another helps increase the availability of contiguous frequency bandwidth and thereby throughput available to other devices and/or traffic types, but at the cost of increasing overhead due to the control signalling needed to signal the frequency allocation changes.

WO 2018/019085 A1 describes that a set of resources for carrying grant free uplink transmissions can be reconfigured by a UE-specific or group common downlink control signal and that the reconfiguration in the frequency domain may be such that the resulting updated set of resources spans a different set of frequency-domain resources than the initial set of resources.

### SUMMARY

The present invention provides a method according to claim 1, a method according to claim 7, a wireless device according to claim 12, and a radio network equipment according to claim 14. The dependent claims define further embodiments.

### BRIEF DESCRIPTION OF THE DRAWINGS

Figure 1 is a block diagram of a wireless communication system that includes a wireless device and radio network equipment.
Figure 2 is a block diagram of radio network equipment and wireless device where frequency-resource allocations recur periodically
Figure 3A is a block diagram of a control message that indicates device-specific frequency-resource allocation changes according to some embodiments.
Figure 3B is a block diagram of a control message that indicates a common frequency-resource allocation change according to some embodiments.
Figure 3C is a block diagram of a control message that indicates one or more device-specific frequency-resource allocation changes and a common frequency-resource allocation change according to some embodiments.
Figure 4A is a block diagram of fields of a control message for indicating a device-specific frequency-resource allocation change according to some embodiments.
Figure 4B is a block diagram of fields of a control message for indicating a common frequency-resource allocation change according to some embodiments.
Figure 4C is a block diagram of fields of a control message for indicating a device-specific frequency-resource allocation change according to other embodiments.
Figure 4D is a block diagram of fields of a control message for indicating a common frequency-resource allocation change according to other embodiments.
Figure 5 is a block diagram and message format structure for indicating frequency-resource allocation changes in a control message.
Figure 6A is a block diagram of fields of a control message for indicating a device-specific frequency-resource allocation change.
Figure 6B is a block diagram of fields of a control message for indicating a device-specific frequency-resource allocation change.
Figure 7 is a block diagram and message format structure for indicating frequency-resource allocation changes in a control message.
Figure 8 is a logic flow diagram of a method performed by a wireless device.
Figure 9 is a block diagram of frequency-resource allocations that are scattered and unscattered.
Figure 10 is a block diagram of frequency-resource allocation changes and resulting downlink control information messages.
Figure 11 is a logic flow diagram of a method performed by a wireless device according to other embodiments.
Figure 12 is a logic flow diagram of a method performed by radio network equipment according to other embodiments.
Figure 13A is a block diagram of a wireless device according to some embodiments.
Figure 13B is a block diagram of a wireless device according to other embodiments.

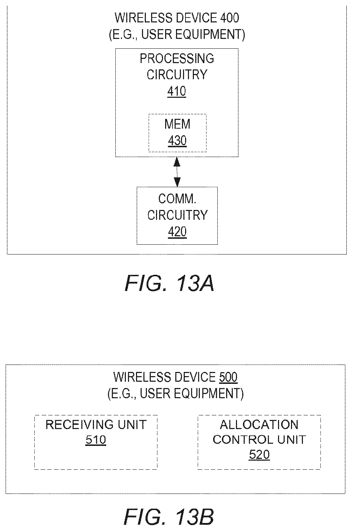

Figure 13A is a block diagram of radio network equipment according to some embodiments.
Figure 13B is a block diagram of radio network equipment according to other embodiments.

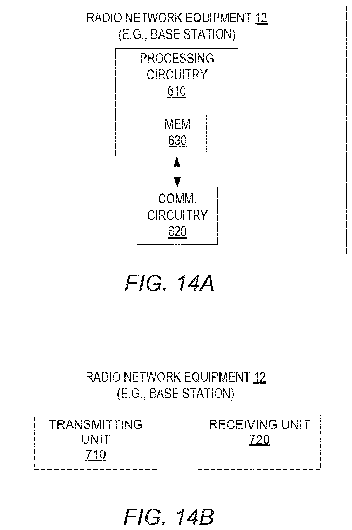

Figure 14 is a block diagram of a wireless communication network according to some embodiments.

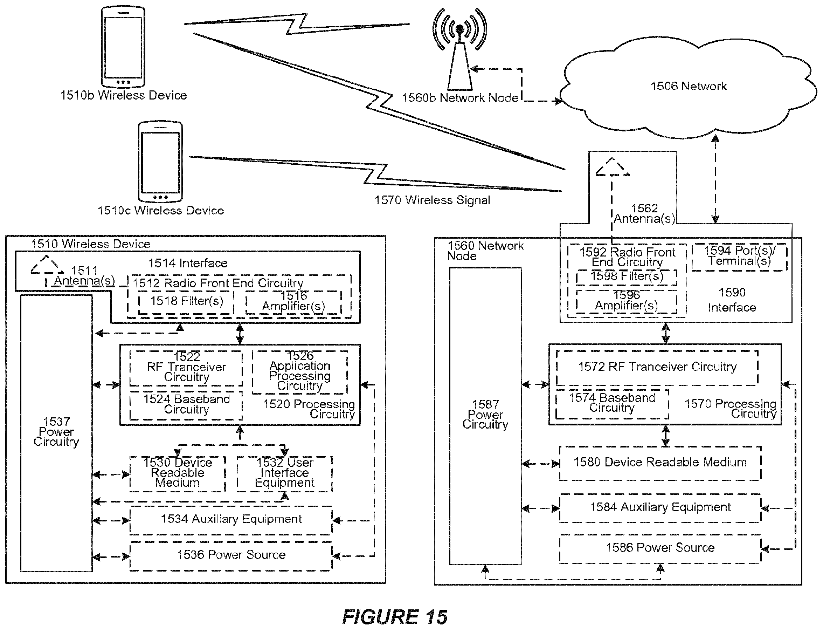

Figure 15 is a block diagram of a user equipment.

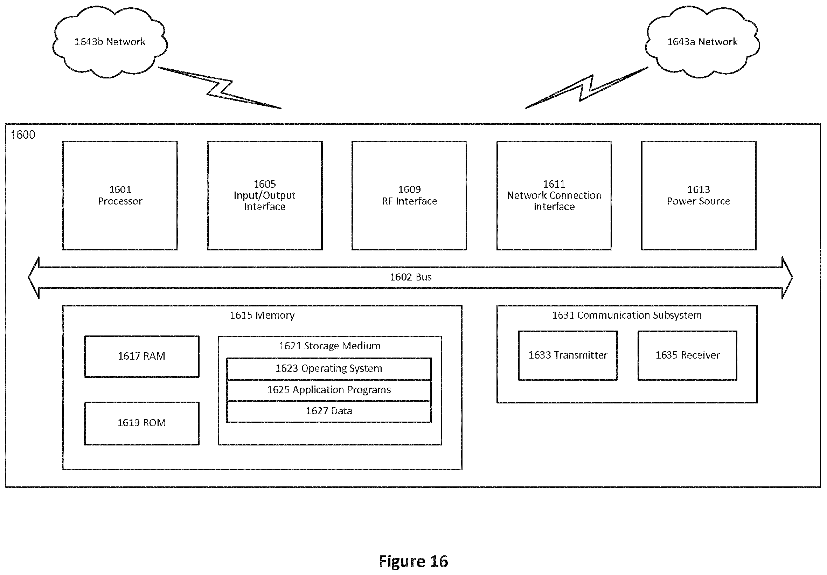

Figure 16 is a block diagram of a virtualization environment.

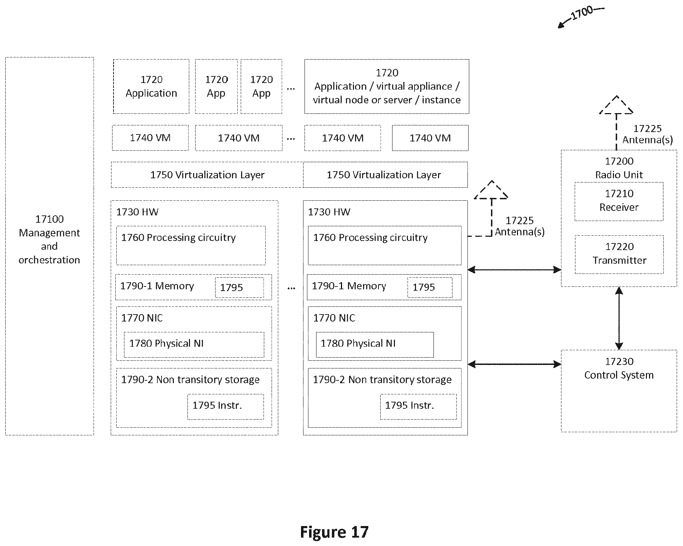

Figure 17 is a block diagram of a communication network with a host computer.

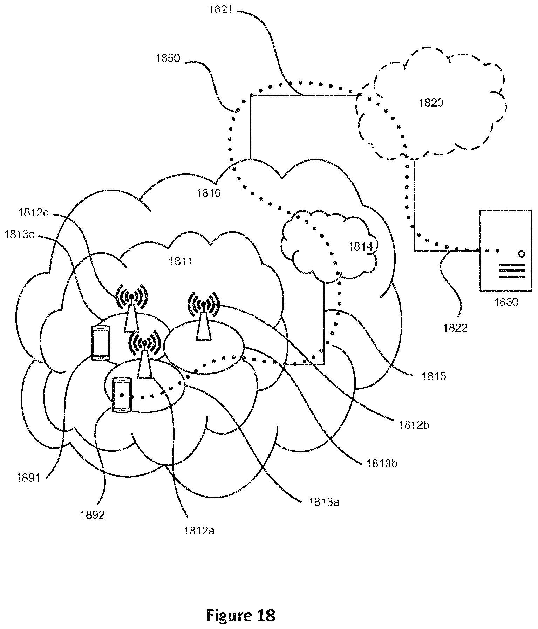

Figure 18 is a block diagram of a host computer.

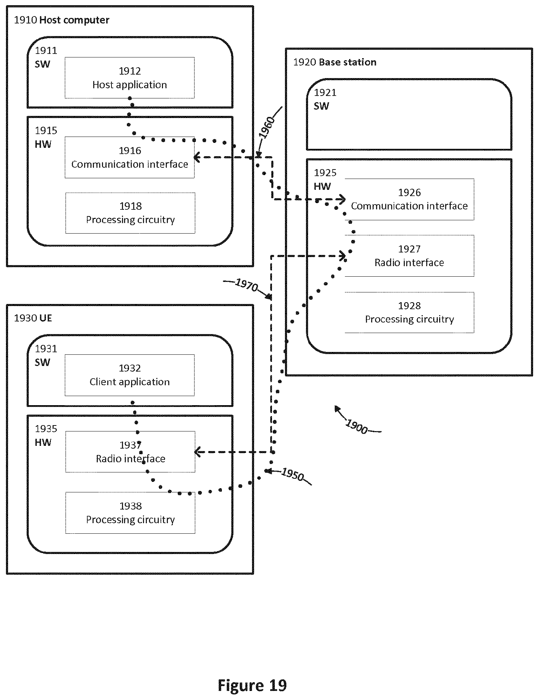

Figure 19 is a flowchart illustrating a method implemented in a communication system.

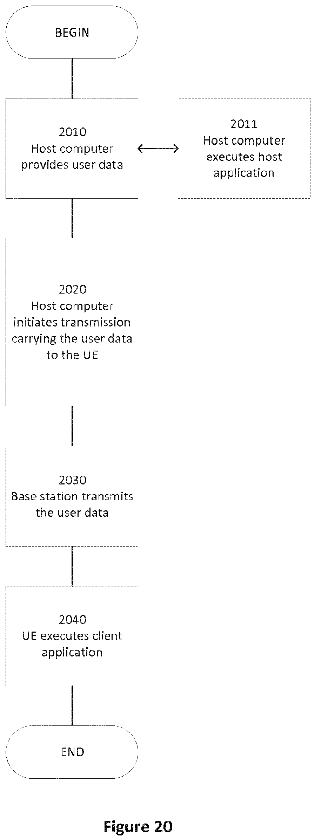

Figure 20 is a flowchart illustrating a method implemented in a communication system.

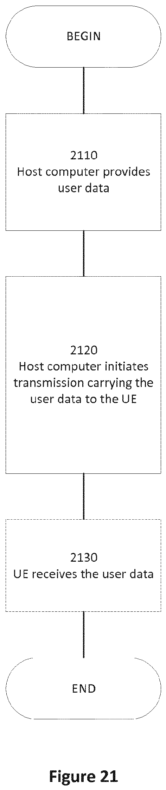

Figure 21 is a flowchart illustrating a method implemented in a communication system.

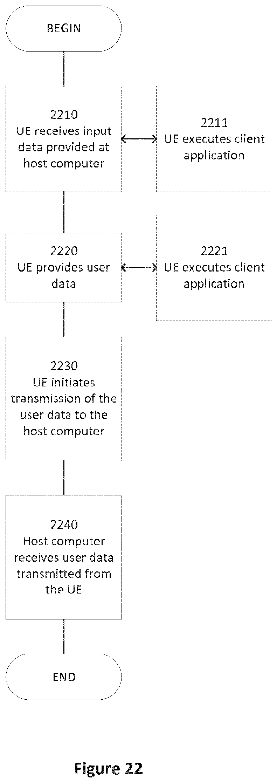

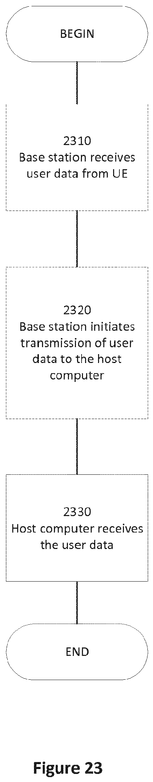

Figure 22 is a flowchart illustrating a method implemented in a communication system.

### DETAILED DESCRIPTION

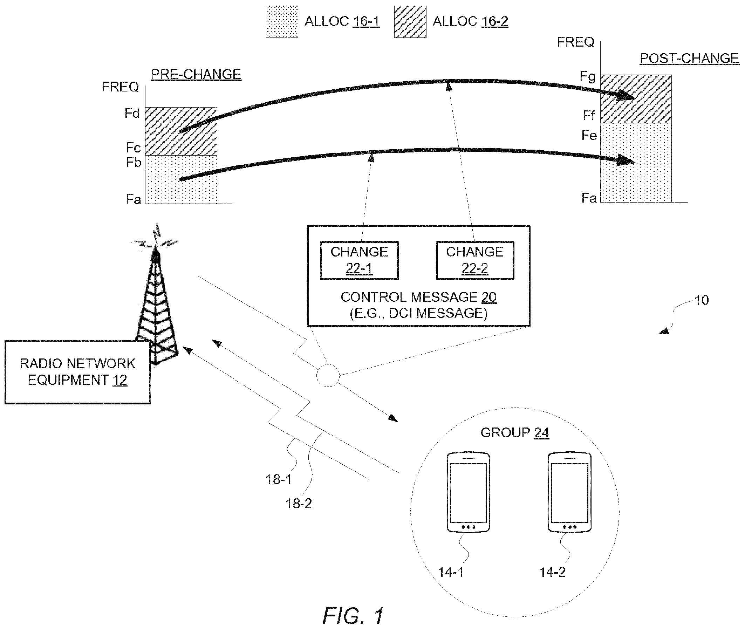

Figure 1 shows a wireless communication system 10 which does not fall within the scope of the claims.

The system 10 includes radio network equipment 12 (e.g., a base station) in a radio access network portion of the system 10. The system 10 also includes multiple wireless devices 14 configured to wirelessly communicate with the radio network equipment 12, e.g., for connecting to a core network portion (not shown) of the system 10.

The radio network equipment 12 is configured to control the radio resources on which wireless devices transmit in the uplink to the radio network node 12. The radio resources may for example include radio resources in the frequency domain, referred to herein as frequency resources. The radio network equipment 12 as shown in Figure 1 for instance grants one wireless device 14-1 uplink frequency-resource allocation 16-1 for performing uplink transmission 18-1 and grants another wireless device 14-2 uplink frequency-resource allocation 16-2 for performing uplink transmission 18-2. The uplink frequency-resource allocations 16-1 and 16-2 in some embodiments are each contiguous frequency-resource allocations; that is, the frequency resources allocated by each individual allocation 16-1, 16-2 are contiguous in frequency. Furthermore, the uplink frequency-resource allocations 16-1 and 16-2 in some embodiments are not only individually contiguous, but are also contiguous collectively; that is, the frequency resources allocated across the multiple allocations 16-1, 16-2 are contiguous in frequency.

The uplink frequency-resource allocations 16-1, 16-2 for the wireless devices 14-1, 14-2 may need to be changed for any number of reasons. For example, the channel conditions of one or more of the devices 14-1, 14-2 may have changed so as to warrant increasing or decreasing the size of the device's frequency-resource allocation. Or, even if a device's own circumstances do not directly warrant a change in the device's frequency-resource allocation, such a change may nevertheless be indirectly prompted by a change in another device's frequency-resource allocation, especially where the devices' allocations are contiguous with one another.

No matter the particular reason for the changes, the radio network equipment 12 in this regard is configured to transmit a control message 20 (e.g., a downlink control information, DCI, message) that indicates changes 22-1, 22-2 in the uplink frequency-resource allocations 18-1, 18-2 for the respective wireless devices 14-1, 14-2. As shown, for instance, the change 22-1 indicated in the uplink frequency-resource allocation 16-1 for wireless device 14-1 is that the uplink frequency-resource allocation 16-1 changes from spanning frequency resources Fa to Fb to spanning frequency resources Fa to Fe. And the change 22-2 indicated in the uplink frequency-resource allocation 16-2 for wireless device 14-2 is that the uplink frequency-resource allocation 16-2 changes from spanning frequency resources Fc to Fd to spanning frequency resources Ff to Fg. The changes 22-1, 22-2 in these and other embodiments therefore are related or coordinated such that they change the individual frequency resource allocations 16-1, 16-2 while maintaining the collectively contiguous nature of the allocations 16-1, 16-2, i.e., the allocations 16-1, 16-2 collectively span contiguous frequency resources both before and after the changes 22-1, 22-2.

Regardless of the particular nature of the changes, though, the changes 22-1, 22-2 in the frequency-resource allocations 16-1, 16-2 for respective wireless devices 14-1, 14-2 are notably signalled in this way using the same, single control message 20. That is, the single control message 20 indicates uplink frequency-resource allocation changes for multiple wireless devices 14-1, 14-2 (e.g., in group 24), rather than indicating just one uplink frequency-resource allocation for one individual wireless device so as to require a separate message for each change to be signalled. Indeed, each of the wireless devices 14-1, 14-2 shown in Figure 1 receives this same control message 20 but applies whichever change 22-1, 22-2 the control message 20 indicates as being for that wireless device. In fact, in some embodiments, the changes 22-1, 22-2 are device-specific but are indicated via a control message 20 that is common to the devices. The control message 20 in these and other embodiments may be referred to as a group-common control message since it may be commonly directed to a group 24 of devices whose allocation changes are indicated by the message. In embodiments where the control message 20 is a DCI message, for instance, cyclic redundancy check (CRC) parity bits of the message 20 may be scrambled using a radio network temporary identity (RNTI) that is common to wireless devices 14-1, 14-2 in the group 24, i.e., a group-common RNTI. The radio network equipment 12 may configure each of the devices 14-1, 14-2 in the group 24 with this RNTI, e.g., via higher-layer signalling such as radio resource control (RRC) signaling.

In any event, with changes in the individual frequency-resource allocations 16-1, 16-2 for multiple respective wireless devices 14-1, 14-2 indicated by the same control message 20, rather than by multiple control messages dedicated for respective devices, some embodiments herein prove advantageous from a control signalling overhead perspective. In fact, the control message 20 in some embodiments may be dedicated to indicating frequency-resource allocation changes for a group of wireless devices, e.g., so as to minimize the size of the control message 20.

Minimizing or otherwise limiting the signalling overhead attributable to changes in frequency-resource allocation needs frees the radio network equipment 12 to more aggressively change frequency-resource allocations to track the allocation needs of the wireless devices 14-1, 14-2. This may in turn enable the radio network equipment 12 to better keep frequency-resource allocations together in frequency, so that the allocations collectively are more contiguous in nature and/or contiguous for longer periods of time. And better keeping the frequency-resource allocations together in frequency may in turn help increase the frequency bandwidth and thereby throughput available to other devices and/or traffic types. For example, where the uplink transmissions 18-1, 18-2 convey latency-critical traffic (e.g., for URLLC), some embodiments herein limit the signalling overhead attributable to changes in the frequency resource allocation needs for latency-critical traffic, so as to enable the radio network equipment 12 to better keep frequency-resource allocations for the latency-critical traffic together in frequency and in turn better support the frequency bandwidth needs and throughput potential of mobile broadband traffic (e.g., eMBB).

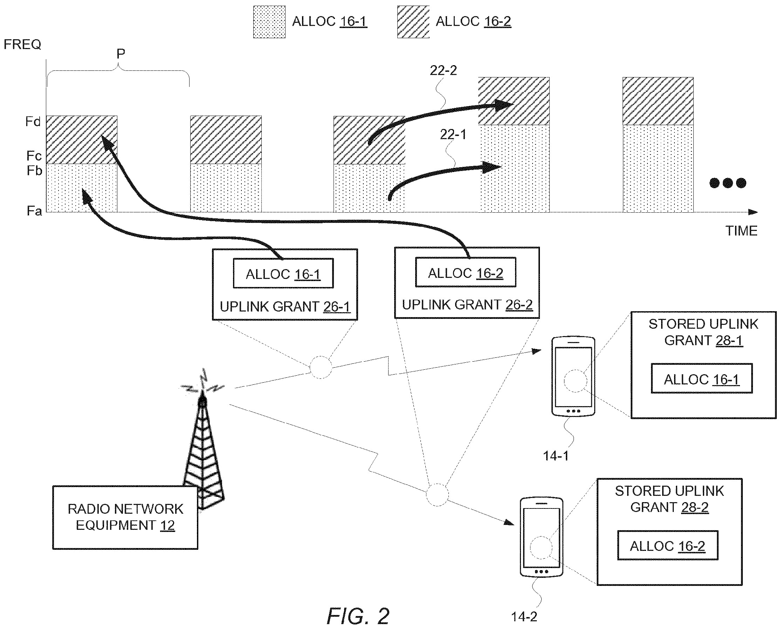

Figure 2 illustrates additional details, which does not fall within the scope of the claims, where the uplink frequency-resource allocations 16-1, 16-2 recur periodically, e.g., to support latency-critical traffic. As shown, the radio network equipment 12 in these embodiments transmits uplink grants 26-1, 26-2 to the respective wireless devices 14-1, 14-2 (e.g., as separate DCI messages on a physical downlink control channel, PDCCH). Uplink grant 26-1 indicates the uplink frequency-resource allocation 16-1 for wireless device 14-1 (e.g., as spanning frequency resources Fa to Fb) and uplink grant 26-2 indicates the uplink frequency-resource allocation 16-2 for wireless device 14-2 (e.g., as spanning frequency resources Fc to Fd). The wireless devices 14-1, 14-2 are configured to store the respective uplink grants 26-1, 26-2 as stored uplink grants 28-1, 28-2, which may also be referred to as configured uplink grants. In NR embodiments, the stored uplink grants 28-1, 28-2 may be Type 2 configured grants, which are partly RRC configured and partly L1 signaled (e.g., the resource allocation follows the L1 signaled uplink grant and the allocation recurs periodically as configured by RRC). In some embodiments, the stored uplink grants 28-1, 28-2 are configured (e.g., by RRC) to periodically recur, e.g., with a period P, such that the uplink frequency-resource allocations 16-1, 16-2 indicated by the respective grants likewise periodically recur as shown in Figure 2. A stored uplink grant 28-1 or 28-2 may be configured to periodically recur in the sense that the stored uplink grant 28-1 or 28-2 is configured to be periodically delivered to a transmission entity (e.g., a hybrid automatic repeat request, HARQ, entity) at a wireless device 14-1 or 14-2, e.g., as if received as a normal dynamic uplink grant. In some embodiments, a stored uplink grant 28-1 or 28-2 may be configured in this way based on control signalling (e.g., L1 signalling not shown) indicating whether the stored uplink grant 28-1 or 28-2 is activated or deactivated.

Regardless, in some embodiments with respect to Figure 2, the radio network equipment 12 is configured to transmit the control message 20 of Figure 1 to the wireless devices 14-1, 14-2 in order to signal changes 22-1, 22-2 in the uplink frequency-resource allocations 16-1, 16-2 that are indicated by the stored uplink grants 28-1, 28-2 at the devices 14-1, 14-2. The changes 22-1, 22-2 indicated by the control message 20 may therefore apply to any future recurrences of the uplink frequency-resource allocations 16-1, 16-2, as shown in Figure 2, e.g., at least any future recurrences that occur after a certain validity time. Moreover, in embodiments where the stored uplink grants 28-1, 28-2 indicate one or more other transmission parameters besides the uplink frequency-resource allocations 16-1, 16-2, the control message 20 and/or the changes 22-1, 22-2 may apply only to the uplink frequency-resource allocations 16-1, 16-2, not any other transmission parameters indicated by the stored uplink grants 28-1, 28-2. The wireless devices 14-1, 14-2 may in such a case change the uplink frequency-resource allocations 16-1, 16-2 indicated by the stored uplink grants 28-1, 28-2 according to the control message 20, but maintain one or more other transmission parameters indicated by the stored uplink grants 28-1, 28-2 (e.g., transport block size, transmission length, pre-coder, etc.). In other embodiments, though, even if the control message 20 and/or the changes 22-1, 22-2 apply only to the uplink frequency-resource allocations 16-1, 16-2, the wireless devices 14-1, 14-2 may nonetheless update one or more other transmission parameters (e.g., pre-coder) as a result of or to account for the changes 22-1, 22-2 to the uplink frequency-resource allocations 16-1, 16-2.

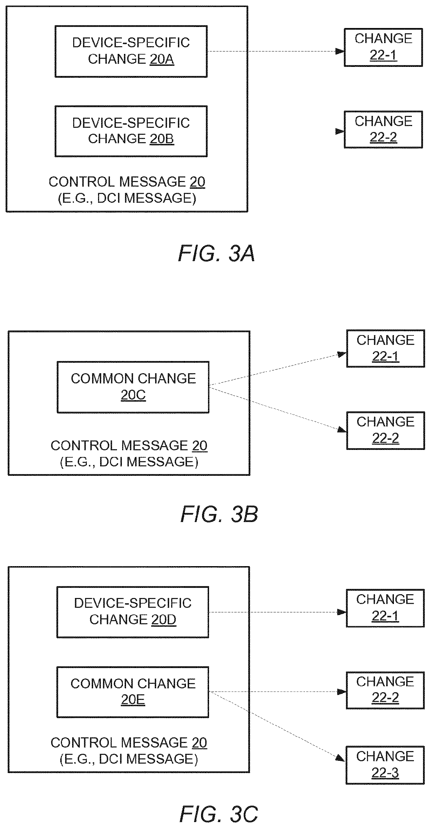

Regardless of whether or not the uplink frequency-resource allocations 16-1, 16-2 recur, the control message 20 may indicate changes 22-1, 22-2 in those allocations 16-1, 16-2 in any number of ways. Figure 3A for instance shows embodiments in which the control message 20 indicates each of the changes 22-1, 22-2 for wireless devices 14-1, 14-2 by indicating a device-specific change that is to be specifically applied by a certain device 14-1 or 14-2. In particular, the control message 20 in Figure 3A indicates change 22-1 by indicating a device-specific change 20A that is to be specifically applied by wireless device 14-1 and indicates change 22-2 by indicating a device-specific change 20B that is to be specifically applied by wireless device 14-2. Figure 3B by contrast shows embodiments in which the control message 20 indicates the changes 22-1, 22-2 for wireless devices 14-1, 14-2 by indicating a (common) change 20C that is to be applied by each of the wireless device 14-1, 14-2. For example, the change 20C may indicate that both of the devices 14-1, 14-2 are to shift their uplink frequency-resource allocation 16-1 or 16-2 by a certain amount. Figure 3C illustrates yet other embodiments that are a combination of those illustrated in Figures 3A and 3B. In particular, the control message 20 in these hybrid embodiments indicates change 22-1 by indicating a device-specific change 20D that is to be applied by wireless device 14-1, and indicates change 22-2 and another change 22-3 by indicating a (common) change 20E that is to be applied by each of device 14-2 and another device 14-3. In one embodiment, the devices that are to apply the common change 20E include those that are in the group 24 but are not identified by the control message 20 as being devices that are to apply device-specific changes. Generally, then, the control message 20 may indicate the change in the allocation for at least one device in the group 24 by indicating a device-specific change and/or may indicate changes for at least two devices in the group 24 by indicating a change that is to be applied by each of the at least two devices.

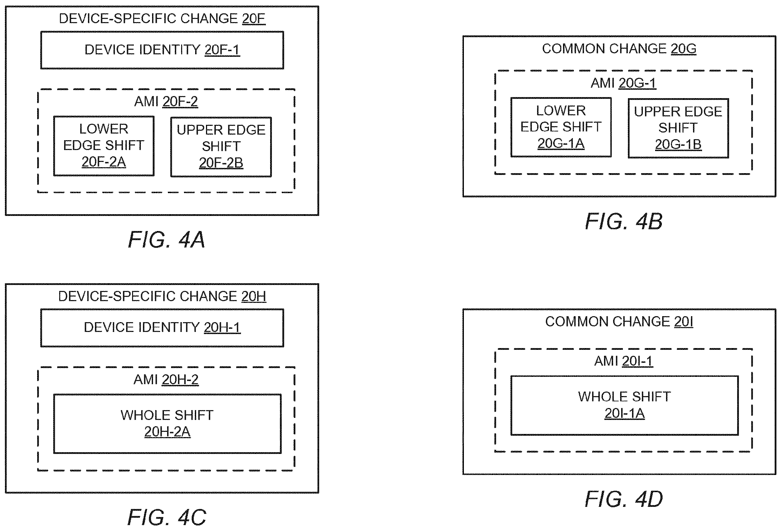

Consider now additional details of how the control message 20 indicates a device-specific change and/or a common change according to various embodiments. In some embodiments, the control message 20 includes one or more pairs of parameters, each pair including an identity field and an allocation modification indicator (AMI) field. The control message 20 may for example include one such pair for each device-specific change to be indicated. Figure 4A shows one pair of an identity field 20F-1 and an AMI field 20F-2 for indicating a device-specific change 20F. The identity field 20F-1 identifies a certain wireless device (in the group 24) that is to apply the device-specific change 20F. The identity field 20F-1 may for instance explicitly identify the certain wireless device by indicating an identity of that device, which e.g., may uniquely identify the certain wireless device within the group 24, but not outside of the group. In one embodiment, for example, the identity is indicated by X bits in the control message 20, where N wireless devices are included in the group 24 and where N ≤ 2^{X}.

Regardless, the AMI field 20F-2 indicates the change in the uplink frequency-resource allocation for the certain wireless device identified by the identity field 20F-1. The AMI field 20F-2 may for instance indicate an extent to which one or both edges of the allocation for the certain wireless device is or are to be shifted in frequency. In Figure 4A, the AMI field 20F-2 is shown as indicating extents to which edges of the allocation are to be shifted (independently of one another). The AMI field 20F-2 in this regard includes a lower edge shift field 20F-2A that indicates an extent to which a lower edge of the allocation is to be shifted and a higher edge shift field 20F-2B that indicates an extent to which a higher edge of the allocation is to be shifted. In embodiments where the allocations comprise one or more physical resource blocks (PRBs), e.g., as defined in LTE or NR, the extent may be indicated as a number of PRBs by which the lower or higher edge is to be shifted.

Figure 4B similarly shows that a common change 20G may be indicated by an AMI field 20G-1 in much the same way. That is, the AMI field 20G-1 may likewise indicate a (common) extent to which one or both edges of each of the allocations of respective wireless devices is or are to be shifted in frequency. In Figure 4B, the AMI field 20G-1 is shown as indicating extents to which edges of the allocations are to be shifted (independently of one another). The AMI field 20G-1 in this regard includes a lower edge shift field 20G-1A that indicates an extent to which a lower edge of each of the allocations is to be shifted and a higher edge shift field 20G-1B that indicates an extent to which a higher edge of each of the allocations is to be shifted. Although in some embodiments not shown an identity field is included that identifies the wireless devices that are to apply the common change 20G, in Figure 4B no such identity field is included. Instead, the devices that are to apply the common change 20G include those that are in the group 24 but are not identified by the control message 20 as being devices that are to apply device-specific changes.

Contrasted with the embodiments in Figures 4A-4B in which the edges of an allocation may be shifted independently of one another, Figures 4C and 4D indicate other embodiments in which the AMI field indicates an extent to which an uplink frequency-resource allocation is to be shifted (e.g., as a whole in frequency). That is, in these embodiments, both edges of the allocation are to be shifted the same, so that the allocation (e.g., as a whole) shifts in frequency (i.e., to change the allocation's position in frequency, but not the allocation's size). Figure 4C in particular shows that the control message 20 may indicate a device-specific change 20H using a device identity field 20H-1 to identify a certain wireless device and an AMI field 20H-2 that indicates an extent to which the allocation for that certain wireless device is to be shifted (e.g., as a whole in frequency). Figure 4D similarly shows that the control message 20 may indicate a common change 20I using an AMI field 201-1 that indicates the changes in the allocations for at least two wireless devices by indicating an extent to which each of the uplink frequency-resource allocations for the at least two wireless devices is to be shifted (e.g., as a whole frequency).

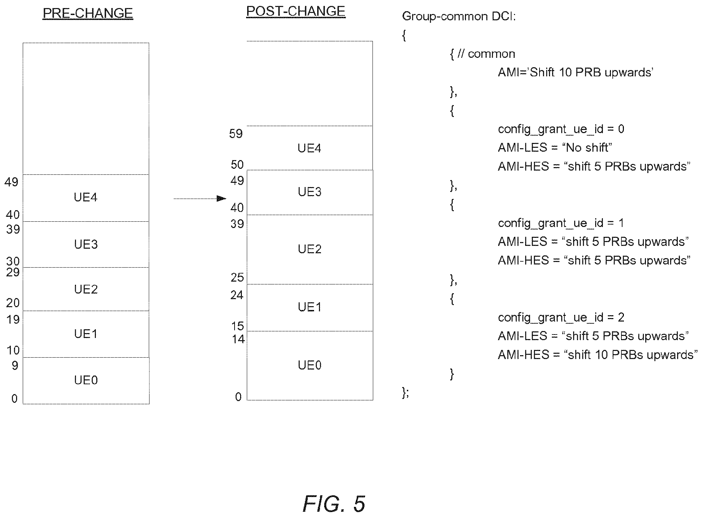

Figure 5 illustrates one concrete example, which does not fall within the scope of the claims, of the embodiments shown in Figure 4A and Figure 4D, in a context where the uplink frequency-resource allocations are formed from PRBs and periodically recur according to configured uplink grants. In this example, each wireless device in the form of a UE is given an identity that is unique within a group. For example, for a group of 6 UEs, the identity may be a 3-bit field. The control message 20 in the example is referred to as a group-common DCI message that indicates allocation changes to affected devices using UEs' identities.

The content of the group-common DCI as shown in Figure 5 consists of a list of pairs {ID, AMI}. The ID field explicitly identifies a UE in the group of UEs with a configured grant and the AMI (Allocation Modification Indicator) field indicates how a UE's allocation is to be changed. The AMI field in this example consist of two fields, LES (Lower-Edge-Shift) and HES (Higher-Edge-Shift) indicating a shift of the allocation's starting-PRB and the ending-PRB, respectively.

The group-common DCI in Figure 5 also includes a common AMI indicating a shift of an allocation that is valid for any UEs that are not explicitly indicated by a pair {ID, AMI}. This may be beneficial when the same allocation shift applies to several UEs, since in some embodiments the common AMI in this case may indicates how UEs are to shift their allocations without having to include bits for the ID field in the DCI (i.e. the ID field can be optional).

With the control message 20 in the form of group-common DCI structured in this way, Figure 5 shows an example addressing 5 UEs with a configured grant where the group-common DCI indicates explicitly to three UEs how their frequency allocations should be modified and implicitly indicates what frequency allocation modification is to be applied to the two other UEs using a common AMI.

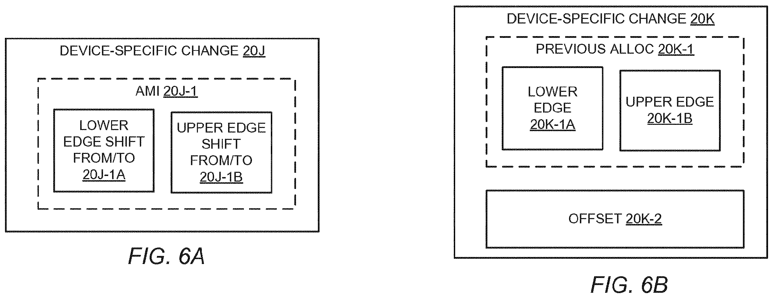

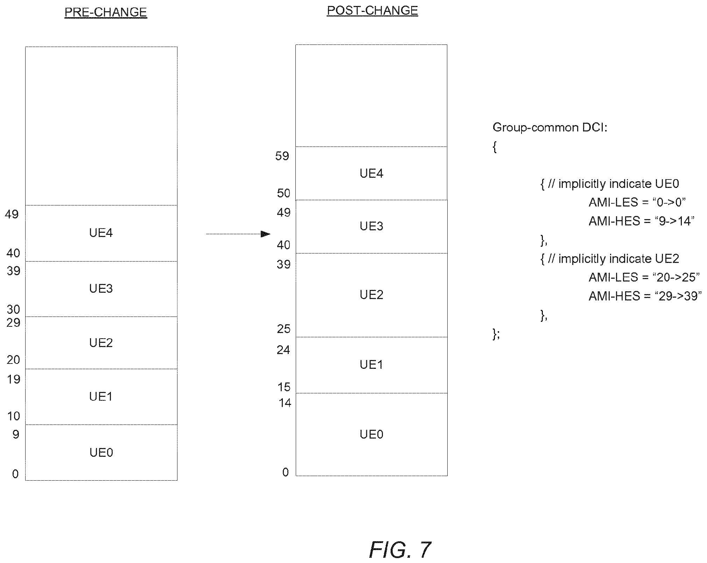

In other embodiments, the control message 20 only implicitly identifies at least one of the wireless devices in the group 24 that is to apply a certain one of the (device-specific) changes. The control message 20 may do so by identifying the uplink frequency-resource allocation for the wireless device and identifying the change that is to be applied to that uplink frequency-resource allocation. In some embodiments, for example, the control message 20 includes one or more pairs of parameters, each pair including a lower edge shift field and a higher edge shift field, one for each device-specific change. Figure 6A shows an example of one such pair for indicating a device-specific change 20J. The lower edge shift field 20J-1A and the higher edge shift field 20J-1B of a pair collectively implicitly indicate that any uplink frequency-resource allocation (for any device) with a certain lower edge and certain higher edge is to be changed to having a certain different lower edge and a certain different higher edge. Figure 7 shows an example of this implicit device indication where the certain lower edge, certain higher edge, certain different lower edge, and certain different higher edge are each identified by a PRB index.

As shown in Figure 7, the AMI field implicitly identifies which UEs are affected (no ID need to be assigned to UE) when indicating the frequency allocation changes that are to be made. This can be realized by the LES and HES indicators being slightly extended to also indicate the starting- and ending-PRB before the allocation modification. With such a modification, all UEs with a configured grant are identified implicitly. Indeed, UE0 and UE2 in Figure 7 can directly see how their allocations should be modified, since their current allocations are within the range to be changed. That is, UE0 and UE2 realize that they are affected not by reading an ID but by comparing their allocation with the indicated allocation change. Similarly, UE1 implicitly realizes that it shifts its frequency allocation upwards based on the new HES for UE0, and UE3 and UE4 both implicitly realize they are to shift their frequency allocations upwards based on the new HES for UE2.

In a variant of the example, only one allocation change may be indicated, e.g. for UE0. For UE1 that has a pre-change allocation from PRB 10 to PRB 19, UE1 may observe that the ending PRB of UE0's allocation has shifted above the starting PRB of UE's allocation. Since UE0's ending-PRB is shifted 5 PRBs upwards, then UE1 deduces that it shall shift both starting- and ending-PRB by 5 PRBs. Similarly, UE3 and UE4 can deduce that they should shift both starting- and ending-PRB by 10 PRBs. Likewise, in another example, if the starting PRB of an existing UE allocation is changed to a lower value, all contiguously allocated UEs with ending PRB higher than or equal new lower PRB of the changing UE allocation, will move both their starting and ending allocations downwards. This way, a single DCI indicating an allocation change leads to an allocation change in size and position of one UE (that had previous allocations in this range), as well as multiple contiguously allocated other UEs which change their allocation position (not size) accordingly.

As this example demonstrates, the UEs that are not implicitly identified using the AMI field are in some embodiments configured to determine how their allocations shall be modified based on (a) how their allocations look like before the modification and how the frequency allocations are changed for the UEs implicitly identified by the AMI field and (b) assuming that the group of UEs with a configured grant always occupy a contiguous set of PRBs. For example, UE4 in Figure 7 realizes that since the AMI field identifies some UE for which AMI-HES = "29→39" then all UEs using a PRB > 29 must shift up by 10 for both LES and HES.

In a variant of the example in Figure 7, instead of AMI-LES/HES indicating a previous and new value, a previous value and an offset/difference may be provided. Generally, then, the control message 20 according to some embodiments includes one or more pairs of a previous allocation field and an offset field, e.g., one for each device-specific change to be indicated. An uplink frequency-resource allocation with a certain lower edge and certain higher edge as indicated by the previous allocation field of a pair is to be offset in frequency by an extent indicated by the offset field of the same pair. Figure 6B generally shows such embodiments with respect to one pair of a previous allocation field and an offset field for indicating a device-specific change 20K. The previous allocation field 20K-1 as shown includes a lower edge field 20K-1A and an upper edge field 20K-1B that respectively indicate the lower edge and the upper edge of an allocation before the change. A wireless device with such an allocation is to change the allocation by applying a frequency offset indicated by the offset field 20K-2.

Note that, in some embodiments, the timing between a received re-allocation DCI and when the new allocation is valid is the same for all UEs. This timing can be either configured by RRC or indicated in the re-allocation DCI, or a mix of these two, i.e., DCI points to a value in a table configured by RRC. The table is the same among all UEs, by explicit configuration in the RRC of a new table for this re-allocation DCI. Another example is to re-use the pre-configured table for UL-grant resource allocation and assume they are the same for these UEs, in which case only timing (i.e., the time between relocation DCI in the PDCCH and the PUSCH transmission indicated in the UL-grant) is considered while other transmission parameters such as TB (Transport Block) size, transmission length, pre-coder etc. are not-changed.

Also note that, in the case that multiple configured grant configurations are configured for a UE in one cell, the above embodiments in which UE ID is explicitly indicated in the DCI can be extended to include both the UE ID and the index of the configured grant configurations. In the above embodiment in which UE ID is implicitly indicated, the index of the impacted configured grants configurations is configured by RRC.

In some embodiments, the size of the re-allocation DCI should preferably not change dynamically. It is possible that a UE can be prepared to receive re-allocation DCls of different sizes (e.g., with different number of indicated UEs or allocations where changes apply), but that would be costly in terms of more blind decoding attempts in the UE. Accordingly, in some embodiments, the size is static, indicated by system information, commonly or dedicated RRC indicated. The size may further depend on BWP (BandWidth Part).

Irrespective of the various modifications above, some embodiments herein in a general sense use a "group-common DCI" (GC DCI) to indicate to a set of UEs a change of frequency allocation, e.g., while keeping other transmission parameters such as TB (Transport Block) size, transmission length, pre-coder etc. un-changed.

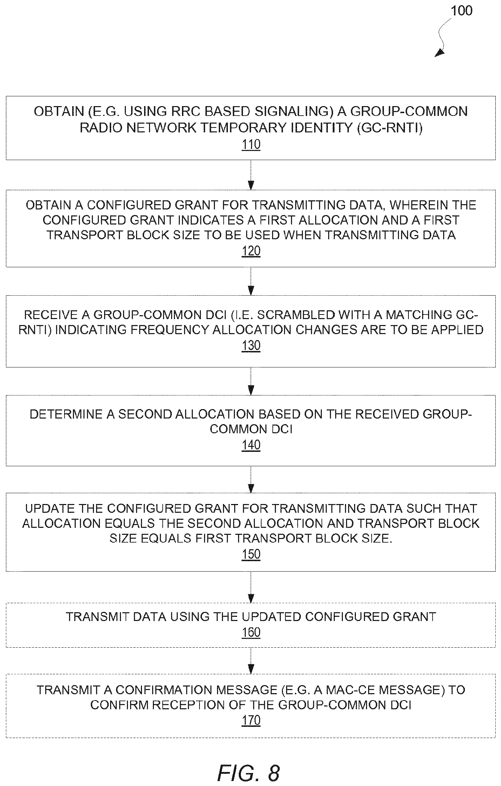

More particularly, a UE in some embodiments performs the method 100 shown in Figure 8. The method 100 includes obtaining (e.g. using RRC based signaling) a group-common Radio Network Temporary Identity (GC-RNTI), e.g., thereby enabling the use group-common operation (Block 110). The method 100 also includes obtaining a configured grant for transmitting data (Block 120). The configured grant indicates a first allocation and a first transport block size to be used when transmitting data. The method 100 further includes receiving a group-common DCI (i.e. scrambled with a matching GC-RNTI) indicating frequency allocation changes are to be applied (Block 130). The method also includes determining a second allocation based on the received group-common DCI (Block 140). The method further includes updating the configured grant for transmitting data such that allocation equals the second allocation and transport block size equals first transport block size (Block 150). In some embodiments, the method 100 may also include transmitting data using the updated configured grant (Block 160). Alternatively or additionally, the method 100 in some embodiments includes transmitting a confirmation message (e.g. a MAC-CE message) to confirm reception of the group-common DCI. For example, the method 100 may include transmitting a MAC-CE message when receiving the group-common DCI or transmitting MAC-CE message if the second allocation differs from the first allocation.

Note that an uplink grant as used above refers to a control message which grants a resource allocation. In other uses, though, an uplink grant may itself refer to the resource allocation that is granted by a control message.

Note also that, although some embodiments above were exemplified with a group of wireless devices that includes two devices, embodiments herein are extendable to a group of any number of wireless devices, e.g., two or more. Moreover, although some embodiments herein were exemplified with uplink frequency-resource allocations, other embodiments herein extend to downlink frequency-resource allocations alternatively or in addition to uplink frequency-resource allocations.

Note further that embodiments herein may be implemented in any type of wireless communication system (e.g., an LTE system, an NR system, etc.) that utilizes uplink frequency-resource allocations for wireless devices. Nonetheless, some embodiments herein are particularly applicable in an NR system as described below with respect to so-called Type 2 configured grants.

More particularly in this regard, in NR, a slot is defined to be 14 symbols and a subframe is 1 ms. The length of a subframe is hence as in LTE but depending of numerology the number of slots per subframe varies. On carrier frequencies below 6 GHz the numerologies 15 kHz and 30 kHz SCS (Sub-Carrier Spacing) is supported while 60 kHz SCS is optional for UE. 15 kHz SCS equals the LTE numerology for normal cyclic prefix.

A DCI is transmitted over a PDCCH (Physical Downlink Control CHannel) and is blindly searched for by the UE. The search performed by the UE involves one or more decoding attempts that are performed based on a hypothetical PDCCH located in pre-defined time-frequency locations, called search space entry. The set of time-frequency locations where a PDCCH may be received is called a search space. In NR, the region of frequency resources within a slot wherein search space is configured is called CORESET (Control Region Set) and can be configured very flexibly. A UE can have several CORESETs configured. The search space for a CORESET may further consist of multiple time-locations where PDCCH is monitored.

NR further supports two types of transmissions, Type A and Type B. Type A transmissions are slot-based, where a slot is defined as 14 OFDM symbols, while Type B is non-slot-based. The purpose with Type B is to enable making short transmissions that can start and end more flexible than Type A. Mini-slot transmissions can be dynamically scheduled and in rel-15 they: (1) can be of length 7, 4, or 2 symbols in DL and UL; and (2) can start and end within in any symbol within a slot.

Although NR supports flexible start and end of mini-slot transmissions, it may be convenient from a scheduling perspective to define transmission time intervals (TTIs) and keep transmissions within a TTI. For DL, it may be convenient to define PDCCH monitoring occasions at regular time instances and keep DL transmissions between two consecutive monitoring occasions.

Type B transmissions are important for URLLC (Ultra-Reliable Low-Latency Communication) since they reduce latency; the transmissions can be scheduled and start sooner than for slot-based transmissions where scheduling and transmissions need to wait until the next slot.

NR supports two types of configured grants, Type 1 and Type 2. For Type 1, the UE is RRC configured with a grant that indicates all needed transmission parameters, while for Type 2 the configured grant is partly RRC configured and partly layer 1 (L1) signaled (i.e., DCI signaling). For Type 2 configured grant, the resource allocation follows an UL grant received on the DCI and the resource then recurs periodically whose period is configured by RRC. The UL grant has the time domain resource assignment field that provides a row index of a higher layer configured table pusch-symbolAllocation, where the indexed row defines the slot offset K2, the start and length indicator SLIV, and the PUSCH mapping type to be applied in the PUSCH transmission. The UE transmits a MAC-CE (Medium Access Control-Control Element) to confirm the message when the configured grant is activated or deactivated.

For latency-critical traffic such as URLLC, the use of configured grant may be required to meet the latency requirements. In fact, for URLLC, the latency requirements may be so tight that a configured grant needs to assign resources to each UE in consecutive TTI although the packet inter-arrival period may span several TTI. Support for URLLC may be even demanding since robustness requirements of URLLC may prevent a scheduler from assigning the same frequency resource to multiple UEs. The scheduler may hence need to assign a dedicated frequency resource to each one of the UEs with a configured grant. This means that a configured grant UE may "reserve" a part of the frequency band that cannot be used for other traffic such as eMBB since otherwise the scheduler may fail to meet URLLC performance requirements. A frequency resource allocation consists of a set of PRBs (Physical Resource Block).

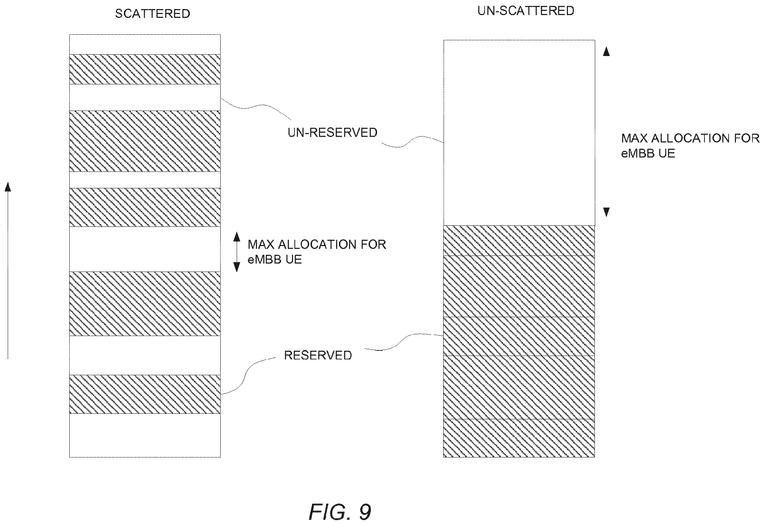

When SC-OFDM (Single-Carrier Orthogonal Frequency-Domain Multiplex) is used in the UL for a UE supporting URLLC traffic, the use of contiguous frequency allocations may be preferable or required, i.e. the allocation consists of the PRBs from a starting-PRB to an ending-PRB with no gaps between the allocated PRBs. This means that it is desired to avoid the frequency resource being scattered since otherwise the possible frequency resource allocation sizes available for UEs supporting eMBB traffic will be smaller. Figure 9 illustrates this principle in which a larger allocation for eMBB UE is possible when resources in frequency are un-scattered.

Accordingly, at least for SC-OFDM and when configured grant is used, it is desired to maintain the un-used resources to be un-scattered to enable large contiguous allocation to be used for dynamic uplink grant-based transmissions (e.g., eMBB) or additional configured grant based transmissions that may become necessary.

There is hence a desire for the scheduler to keep configured grants together to have a large contiguous "un-reserved" resource that can be scheduled to other traffic (e.g. eMBB). This means however that if the frequency allocation needs to be or is desired to be changed for one configured-grant UE several other UEs are impacted. The most likely reason why an allocation needs to change for a UE is that radio conditions change. When radio conditions get worse, a more robust coding scheme is needed where the allocation of additional bandwidth (PRBs) is the most feasible way of realizing the number of available Resource Elements, especially considering that maintaining a short TTI is a typical requirement for URLLC traffic.

If the scheduler can tolerate some degree of PRB scattering the number of affected UEs can be minimized, but in most cases more than one UE will be affected when the bandwidth allocated to a given UE needs to be increased (or reduced). Heretofore, for every UE impacted by such, a change a corresponding DCI would need to be sent indicating the change.

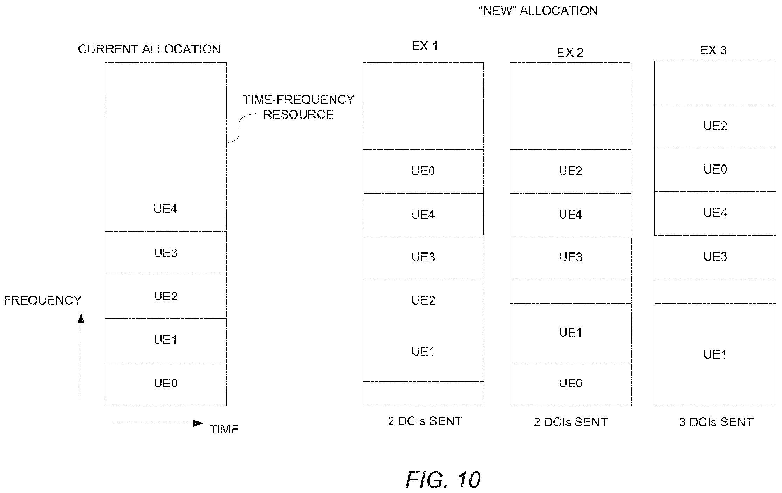

Figure 10 shows three examples, which does not fall within the scope of the claims of how a change in allocation of UE1 may impact the allocation for at least one more UE and would heretofore result in multiple DCls needing to be sent. As shown in Figure 10, an increase of allocation for UE1 affects at least one more UE. Ex 1, Ex 2 and Ex3 are three examples how the new allocation may look after the re-distribution has been done. The resulting resource is somewhat scattered which will have a negative impact on the scheduling flexibility. To completely avoid the resource to be scattered, the allocation for all UEs need to change. Hence, as shown, potentially many DCls would be sent just because the allocation size for one UE needs to change.

Examples herein address this problem by exploiting the control message 20 (e.g., in the form of a group-common DCI message) as described above in order to signal the frequency-resource allocation changes for multiple UEs in a single message, rather than over multiple messages.

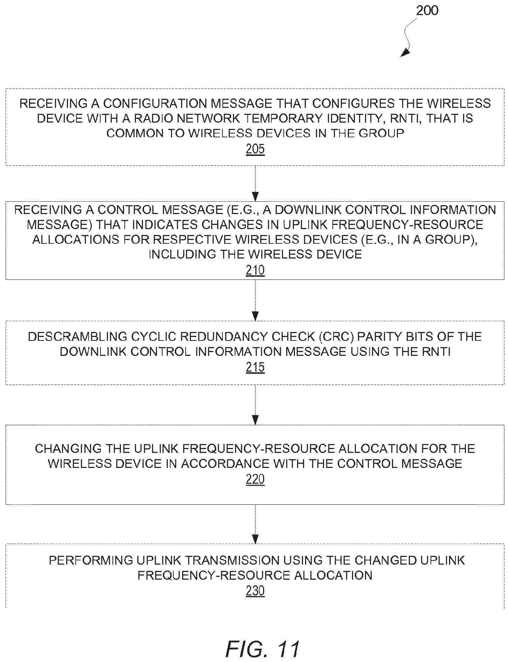

In view of the above modifications and variations, Figure 11 illustrates a method 200 performed by a wireless device 14-1 configured for use in a wireless communication system 10 according to some embodiments. The method 200 as shown includes receiving a control message 20 (precisely, a downlink control information message) that indicates changes 22-1, 22-2 in uplink frequency-resource allocations 16-1, 16-2 for respective wireless devices 14-1, 14-2 (precisely, in a group 24), including the wireless device 14-1 (Block 210). For each of the uplink frequency-resource allocations 16-1, 16-2, frequency resources allocated by the uplink frequency-resource allocation are contiguous in frequency. Regardless, the method 200 further includes changing the uplink frequency-resource allocation 16-1 for the wireless device 14-1 in accordance with the control message 20 (Block 220). In some embodiments, the method 20 may also include performing uplink transmission 18-1 using the changed uplink frequency-resource allocation 16-1 (e.g., after a time at which the changes indicated by the downlink control information message are valid) (Block 230).

In some embodiments, the control message 20 may take the form of a group-common downlink control information message.

In some embodiments, an uplink grant stored at the wireless device 14-1 indicates the uplink frequency-resource allocation 16-1 for the wireless device 14-1. This uplink grant may be configured to periodically recur (e.g., such that the uplink frequency-resource allocation 16-1 periodically recurs). In this case, the method 200 may comprise changing the uplink frequency-resource allocation 16-1 indicated by the stored uplink grant. In these and other embodiments, then, the changes 22-1, 22-2 indicated by the control message 20 may be changes in the uplink frequency-resource allocations indicated by uplink grants that are stored at the respective wireless devices and configured to periodically recur.

Figure 11 furthermore shows that, in some embodiments, the method 200 may further comprise (e.g., before receiving the control message 20) receiving a configuration message that configures the wireless device 14-1 with a radio network temporary identity, RNTI, that is common to wireless devices 14-1, 14-2 in the group 24, e.g., such that the RNTI may be referred to as a group-common RNTI (Block 205). In these and other embodiments, then, the method 200 may also include descrambling cyclic redundancy check (CRC) parity bits of the control message 20 using the RNTI, e.g., in order to determine that the control message 20 is intended for the wireless device 14-1 or, more particularly, the group 24 that includes the wireless device 14-1 (Block 215).

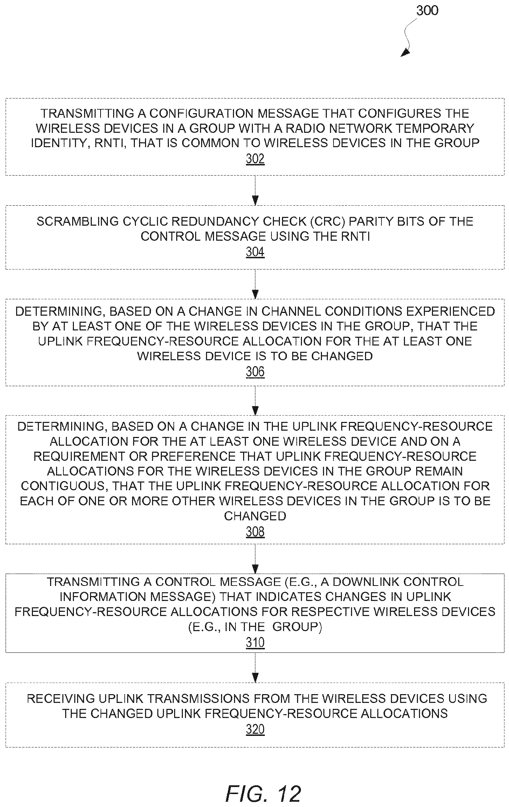

Figure 12 illustrates a corresponding method 300 performed by radio network equipment 12 configured for use in a wireless communication system 10 according to some embodiments. As shown, the method 300 includes transmitting a control message 20 (precisely, a downlink control information message) that indicates changes 22-1, 22-2 in uplink frequency-resource allocations 16-1, 16-2 for respective wireless devices 14-1, 14-2 (precisely, in a group 24) (Block 310). For each of the uplink frequency-resource allocations 16-1, 16-2, frequency resources allocated by the uplink frequency-resource allocation are contiguous in frequency. Regardless, in some embodiments, the method 300 further includes receiving uplink transmissions 18-1, 18-2 from the wireless devices 14-1, 14-2 using the changed uplink frequency-resource allocations 16-1, 16-2 (e.g., after a time at which the changes indicated by the downlink control information message are valid) (Block 320).

In some embodiments, the control message 20 may take the form of a group-common downlink control information message.

In some embodiments, uplink grants stored at the wireless devices 14-1, 14-2 indicate the uplink frequency-resource allocations 16-1, 16-2 for the respective wireless devices 14-1, 14-2. These uplink grants may be configured to periodically recur (e.g., such that the uplink frequency-resource allocations 16-1, 16-2 periodically recur). In these and other embodiments, then, the changes 22-1, 22-2 indicated by the control message 20 may be changes in the uplink frequency-resource allocations indicated by uplink grants that are stored at the respective wireless devices and configured to periodically recur.

Figure 12 furthermore shows that, in some embodiments, the method 300 may further comprise (e.g., before transmitting the control message 20) transmitting a configuration message that configures the wireless devices 14-1, 14-2 in group 24 with a radio network temporary identity, RNTI, that is common to wireless devices 14-1, 14-2 in the group 24, e.g., such that the RNTI may be referred to as a group-common RNTI (Block 302). In these and other embodiments, then, the method 300 may also include scrambling cyclic redundancy check (CRC) parity bits of the control message 20 using the RNTI (Block 304).

Alternatively or additionally, the group of wireless devices 14-1, 14-2 in some embodiments includes wireless devices whose uplink frequency-resource allocations are contiguous. In these and other embodiments, Figure 12 shows that the method 300 in some embodiments includes determining, based on a change in channel conditions experienced by at least one of the wireless devices in the group 24, that the uplink frequency-resource allocation for the at least one wireless device is to be changed (Block 306). The method 300 may then include determining, based on a change in the uplink frequency-resource allocation for the at least one wireless device and on a requirement or preference that uplink frequency-resource allocations for the wireless devices in the group 24 remain contiguous, that the uplink frequency-resource allocation for (e.g., each of) one or more other wireless devices in the group is to be changed (Block 308). The method 300 may then include, as shown, transmitting the control message 20 to carry out the changes determined to be made.

Note that the wireless device 14-1 herein may perform the methods herein and any other processing by implementing any functional means, modules, units, or circuitry. In one embodiment, for example, the wireless device 14-1 comprises respective circuits or circuitry configured to perform the steps shown in Figures 8 and/or 11. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

Figure 13A for example illustrates a wireless device 400 (e.g., a user equipment) in accordance with one or more embodiments, e.g., for implementing wireless device 14-1. As shown, the wireless device 400 includes processing circuitry 410 and communication circuitry 420. The communication circuitry 320 (e.g., radio circuitry) is configured to transmit and/or receive information to and/or from one or more other nodes, e.g., via any communication technology. Such communication may occur via one or more antennas that are either internal or external to the wireless device 400. The processing circuitry 410 is configured to perform processing described above (e.g., in Figures 8 and/or 11), such as by executing instructions stored in memory 430. The processing circuitry 410 in this regard may implement certain functional means, units, or modules.

Figure 13B illustrates a schematic block diagram of a wireless device 500 (e.g., a user equipment) according to still other embodiments, e.g., for implementing wireless device 14-1. As shown, the wireless device 500 implements various functional means, units, or modules, e.g., via the processing circuitry 410 in Figure 13A and/or via software code. These functional means, units, or modules, e.g., for implementing the method 200 herein, include for instance a receiving unit or module 510 for receiving a control message 20 (e.g., a downlink control information message) that indicates changes 22-1, 22-2 in uplink frequency-resource allocations 16-1, 16-2 for respective wireless devices 14-1, 14-2 (e.g., in a group 24), including the wireless device 14-1. Also included may be an allocation control unit or module 520 for changing the uplink frequency-resource allocation 16-1 for the wireless device 14-1 in accordance with the control message 20.

Note also that the radio network equipment 12 herein may perform the methods herein and any other processing by implementing any functional means, modules, units, or circuitry. In one embodiment, for example, the radio network equipment 12 comprises respective circuits or circuitry configured to perform the steps shown in Figure 12. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

Figure 14A for example illustrates radio network equipment 12 in accordance with one or more embodiments. As shown, the radio network equipment 12 includes processing circuitry 610 and communication circuitry 620. The communication circuitry 620 (e.g., radio circuitry) is configured to transmit and/or receive information to and/or from one or more other nodes, e.g., via any communication technology. Such communication may occur via one or more antennas that are either internal or external to the radio network equipment 12. The processing circuitry 610 is configured to perform processing described above (e.g., in Figure 12), such as by executing instructions stored in memory 630. The processing circuitry 610 in this regard may implement certain functional means, units, or modules.

Figure 14B illustrates a schematic block diagram of radio network equipment 12 according to still other embodiments. As shown, the radio network equipment 12 implements various functional means, units, or modules, e.g., via the processing circuitry 610 in Figure 14A and/or via software code. These functional means, units, or modules, e.g., for implementing the method 300 herein, include for instance a transmitting unit or module 710 for transmitting a control message 20 (e.g., a downlink control information message) that indicates changes 22-1, 22-2 in uplink frequency-resource allocations 16-1, 16-2 for respective wireless devices 14-1, 14-2 (e.g., in a group 24). Also included may be a receiving unit or module 720 for receiving uplink transmissions 18-1, 18-2 from the wireless devices 14-1, 14-2 using the changed uplink frequency-resource allocations 16-1, 16-2 (e.g., after a time at which the changes indicated by the downlink control information message are valid)

Although the subject matter described herein may be implemented in any appropriate type of system using any suitable components, the embodiments disclosed herein are described in relation to a wireless network, such as the example wireless network illustrated in Figure 14. For simplicity, the wireless network of Figure 14 only depicts network 1406, network nodes 1460 and 1460b, and WDs 1410, 1410b, and 1410c. In practice, a wireless network may further include any additional elements suitable to support communication between wireless devices or between a wireless device and another communication device, such as a landline telephone, a service provider, or any other network node or end device. Of the illustrated components, network node 1460 and wireless device (WD) 1410 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), Narrowband Internet of Things (NB-loT), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1406 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1460 and WD 1410 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 14, network node 1460 includes processing circuitry 1470, device readable medium 1480, interface 1490, auxiliary equipment 1484, power source 1486, power circuitry 1487, and antenna 1462. Although network node 1460 illustrated in the example wireless network of Figure 14 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1460 are depicted as single boxes located within a larger box, or nested within multiple boxes, in practice, a network node may comprise multiple different physical components that make up a single illustrated component (e.g., device readable medium 1480 may comprise multiple separate hard drives as well as multiple RAM modules).

Similarly, network node 1460 may be composed of multiple physically separate components (e.g., a NodeB component and a RNC component, or a BTS component and a BSC component, etc.), which may each have their own respective components. In certain scenarios in which network node 1460 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1460 may be configured to support multiple radio access technologies (RATs). In such embodiments, some components may be duplicated (e.g., separate device readable medium 1480 for the different RATs) and some components may be reused (e.g., the same antenna 1462 may be shared by the RATs). Network node 1460 may also include multiple sets of the various illustrated components for different wireless technologies integrated into network node 1460, such as, for example, GSM, WCDMA, LTE, NR, WiFi, or Bluetooth wireless technologies. These wireless technologies may be integrated into the same or different chip or set of chips and other components within network node 1460.

Processing circuitry 1470 is configured to perform any determining, calculating, or similar operations (e.g., certain obtaining operations) described herein as being provided by a network node. These operations performed by processing circuitry 1470 may include processing information obtained by processing circuitry 1470 by, for example, converting the obtained information into other information, comparing the obtained information or converted information to information stored in the network node, and/or performing one or more operations based on the obtained information or converted information, and as a result of said processing making a determination.

Processing circuitry 1470 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1460 components, such as device readable medium 1480, network node 1460 functionality. For example, processing circuitry 1470 may execute instructions stored in device readable medium 1480 or in memory within processing circuitry 1470. Such functionality may include providing any of the various wireless features, functions, or benefits discussed herein. In some embodiments, processing circuitry 1470 may include a system on a chip (SOC).

In some embodiments, processing circuitry 1470 may include one or more of radio frequency (RF) transceiver circuitry 1472 and baseband processing circuitry 1474. In some embodiments, radio frequency (RF) transceiver circuitry 1472 and baseband processing circuitry 1474 may be on separate chips (or sets of chips), boards, or units, such as radio units and digital units. In alternative embodiments, part or all of RF transceiver circuitry 1472 and baseband processing circuitry 1474 may be on the same chip or set of chips, boards, or units

In certain embodiments, some or all of the functionality described herein as being provided by a network node, base station, eNB or other such network device may be performed by processing circuitry 1470 executing instructions stored on device readable medium 1480 or memory within processing circuitry 1470. In alternative embodiments, some or all of the functionality may be provided by processing circuitry 1470 without executing instructions stored on a separate or discrete device readable medium, such as in a hard-wired manner. In any of those embodiments, whether executing instructions stored on a device readable storage medium or not, processing circuitry 1470 can be configured to perform the described functionality. The benefits provided by such functionality are not limited to processing circuitry 1470 alone or to other components of network node 1460, but are enjoyed by network node 1460 as a whole, and/or by end users and the wireless network generally.

Device readable medium 1480 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1470. Device readable medium 1480 may store any suitable instructions, data or information, including a computer program, software, an application including one or more of logic, rules, code, tables, etc. and/or other instructions capable of being executed by processing circuitry 1470 and, utilized by network node 1460. Device readable medium 1480 may be used to store any calculations made by processing circuitry 1470 and/or any data received via interface 1490. In some embodiments, processing circuitry 1470 and device readable medium 1480 may be considered to be integrated.

Interface 1490 is used in the wired or wireless communication of signalling and/or data between network node 1460, network 1406, and/or WDs 1410. As illustrated, interface 1490 comprises port(s)/terminal(s) 1494 to send and receive data, for example to and from network 1406 over a wired connection. Interface 1490 also includes radio front end circuitry 1492 that may be coupled to, or in certain embodiments a part of, antenna 1462. Radio front end circuitry 1492 comprises filters 1498 and amplifiers 1496. Radio front end circuitry 1492 may be connected to antenna 1462 and processing circuitry 1470. Radio front end circuitry may be configured to condition signals communicated between antenna 1462 and processing circuitry 1470. Radio front end circuitry 1492 may receive digital data that is to be sent out to other network nodes or WDs via a wireless connection. Radio front end circuitry 1492 may convert the digital data into a radio signal having the appropriate channel and bandwidth parameters using a combination of filters 1498 and/or amplifiers 1496. The radio signal may then be transmitted via antenna 1462. Similarly, when receiving data, antenna 1462 may collect radio signals which are then converted into digital data by radio front end circuitry 1492. The digital data may be passed to processing circuitry 1470. In other embodiments, the interface may comprise different components and/or different combinations of components.

In certain alternative embodiments, which does not fall within the scope of the claims, network node 1460 may not include separate radio front end circuitry 1492, instead, processing circuitry 1470 may comprise radio front end circuitry and may be connected to antenna 1462 without separate radio front end circuitry 1492. Similarly, in some embodiments, all or some of RF transceiver circuitry 1472 may be considered a part of interface 1490. In still other embodiments, interface 1490 may include one or more ports or terminals 1494, radio front end circuitry 1492, and RF transceiver circuitry 1472, as part of a radio unit (not shown), and interface 1490 may communicate with baseband processing circuitry 1474, which is part of a digital unit (not shown).

Antenna 1462 may include one or more antennas, or antenna arrays, configured to send and/or receive wireless signals. Antenna 1462 may be coupled to radio front end circuitry 1490 and may be any type of antenna capable of transmitting and receiving data and/or signals wirelessly. In some embodiments, antenna 1462 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1462 may be separate from network node 1460 and may be connectable to network node 1460 through an interface or port.

Antenna 1462, interface 1490, and/or processing circuitry 1470 may be configured to perform any receiving operations and/or certain obtaining operations described herein as being performed by a network node. Any information, data and/or signals may be received from a wireless device, another network node and/or any other network equipment. Similarly, antenna 1462, interface 1490, and/or processing circuitry 1470 may be configured to perform any transmitting operations described herein as being performed by a network node. Any information, data and/or signals may be transmitted to a wireless device, another network node and/or any other network equipment.

Power circuitry 1487 may comprise, or be coupled to, power management circuitry and is configured to supply the components of network node 1460 with power for performing the functionality described herein. Power circuitry 1487 may receive power from power source 1486. Power source 1486 and/or power circuitry 1487 may be configured to provide power to the various components of network node 1460 in a form suitable for the respective components (e.g., at a voltage and current level needed for each respective component). Power source 1486 may either be included in, or external to, power circuitry 1487 and/or network node 1460. For example, network node 1460 may be connectable to an external power source (e.g., an electricity outlet) via an input circuitry or interface such as an electrical cable, whereby the external power source supplies power to power circuitry 1487. As a further example, power source 1486 may comprise a source of power in the form of a battery or battery pack which is connected to, or integrated in, power circuitry 1487. The battery may provide backup power should the external power source fail. Other types of power sources, such as photovoltaic devices, may also be used.

Alternative embodiments, which does not fall within the scope of the claims, of network node 1460 may include additional components beyond those shown in Figure 14 that may be responsible for providing certain aspects of the network node's functionality, including any of the functionality described herein and/or any functionality necessary to support the subject matter described herein. For example, network node 1460 may include user interface equipment to allow input of information into network node 1460 and to allow output of information from network node 1460. This may allow a user to perform diagnostic, maintenance, repair, and other administrative functions for network node 1460.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, which does not fall within the scope of the claims, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1410 includes antenna 1411, interface 1414, processing circuitry 1420, device readable medium 1430, user interface equipment 1432, auxiliary equipment 1434, power source 1436 and power circuitry 1437. WD 1410 may include multiple sets of one or more of the illustrated components for different wireless technologies supported by WD 1410, such as, for example, GSM, WCDMA, LTE, NR, WiFi, WiMAX, NB-loT, or Bluetooth wireless technologies, just to mention a few. These wireless technologies may be integrated into the same or different chips or set of chips as other components within WD 1410.

Antenna 1411 may include one or more antennas or antenna arrays, configured to send and/or receive wireless signals, and is connected to interface 1414. In certain alternative embodiments, antenna 1411 may be separate from WD 1410 and be connectable to WD 1410 through an interface or port. Antenna 1411, interface 1414, and/or processing circuitry 1420 may be configured to perform any receiving or transmitting operations described herein as being performed by a WD. Any information, data and/or signals may be received from a network node and/or another WD. In some embodiments, radio front end circuitry and/or antenna 1411 may be considered an interface.

As illustrated, interface 1414 comprises radio front end circuitry 1412 and antenna 1411. Radio front end circuitry 1412 comprise one or more filters 1418 and amplifiers 1416. Radio front end circuitry 1414 is connected to antenna 1411 and processing circuitry 1420, and is configured to condition signals communicated between antenna 1411 and processing circuitry 1420. Radio front end circuitry 1412 may be coupled to or a part of antenna 1411. In some embodiments, WD 1410 may not include separate radio front end circuitry 1412; rather, processing circuitry 1420 may comprise radio front end circuitry and may be connected to antenna 1411. Similarly, in some embodiments, some or all of RF transceiver circuitry 1422 may be considered a part of interface 1414. Radio front end circuitry 1412 may receive digital data that is to be sent out to other network nodes or WDs via a wireless connection. Radio front end circuitry 1412 may convert the digital data into a radio signal having the appropriate channel and bandwidth parameters using a combination of filters 1418 and/or amplifiers 1416. The radio signal may then be transmitted via antenna 1411. Similarly, when receiving data, antenna 1411 may collect radio signals which are then converted into digital data by radio front end circuitry 1412. The digital data may be passed to processing circuitry 1420. In other embodiments, the interface may comprise different components and/or different combinations of components.

Processing circuitry 1420 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1410 components, such as device readable medium 1430, WD 1410 functionality. Such functionality may include providing any of the various wireless features or benefits discussed herein. For example, processing circuitry 1420 may execute instructions stored in device readable medium 1430 or in memory within processing circuitry 1420 to provide the functionality disclosed herein.

As illustrated, processing circuitry 1420 includes one or more of RF transceiver circuitry 1422, baseband processing circuitry 1424, and application processing circuitry 1426. In other embodiments, the processing circuitry may comprise different components and/or different combinations of components. In certain embodiments processing circuitry 1420 of WD 1410 may comprise a SOC. In some embodiments, RF transceiver circuitry 1422, baseband processing circuitry 1424, and application processing circuitry 1426 may be on separate chips or sets of chips. In alternative embodiments, part or all of baseband processing circuitry 1424 and application processing circuitry 1426 may be combined into one chip or set of chips, and RF transceiver circuitry 1422 may be on a separate chip or set of chips. In still alternative embodiments, part or all of RF transceiver circuitry 1422 and baseband processing circuitry 1424 may be on the same chip or set of chips, and application processing circuitry 1426 may be on a separate chip or set of chips. In yet other alternative embodiments, part or all of RF transceiver circuitry 1422, baseband processing circuitry 1424, and application processing circuitry 1426 may be combined in the same chip or set of chips. In some embodiments, RF transceiver circuitry 1422 may be a part of interface 1414. RF transceiver circuitry 1422 may condition RF signals for processing circuitry 1420.

In certain embodiments, which does not fall within the scope of the claims, some or all of the functionality described herein as being performed by a WD may be provided by processing circuitry 1420 executing instructions stored on device readable medium 1430, which in certain embodiments may be a computer-readable storage medium. In alternative embodiments, some or all of the functionality may be provided by processing circuitry 1420 without executing instructions stored on a separate or discrete device readable storage medium, such as in a hard-wired manner. In any of those particular embodiments, whether executing instructions stored on a device readable storage medium or not, processing circuitry 1420 can be configured to perform the described functionality. The benefits provided by such functionality are not limited to processing circuitry 1420 alone or to other components of WD 1410, but are enjoyed by WD 1410 as a whole, and/or by end users and the wireless network generally.

Processing circuitry 1420 may be configured to perform any determining, calculating, or similar operations (e.g., certain obtaining operations) described herein as being performed by a WD. These operations, as performed by processing circuitry 1420, may include processing information obtained by processing circuitry 1420 by, for example, converting the obtained information into other information, comparing the obtained information or converted information to information stored by WD 1410, and/or performing one or more operations based on the obtained information or converted information, and as a result of said processing making a determination.

Device readable medium 1430 may be operable to store a computer program, software, an application including one or more of logic, rules, code, tables, etc. and/or other instructions capable of being executed by processing circuitry 1420. Device readable medium 1430 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1420. In some embodiments, processing circuitry 1420 and device readable medium 1430 may be considered to be integrated.

User interface equipment 1432 may provide components that allow for a human user to interact with WD 1410. Such interaction may be of many forms, such as visual, audial, tactile, etc. User interface equipment 1432 may be operable to produce output to the user and to allow the user to provide input to WD 1410. The type of interaction may vary depending on the type of user interface equipment 1432 installed in WD 1410. For example, if WD 1410 is a smart phone, the interaction may be via a touch screen; if WD 1410 is a smart meter, the interaction may be through a screen that provides usage (e.g., the number of gallons used) or a speaker that provides an audible alert (e.g., if smoke is detected). User interface equipment 1432 may include input interfaces, devices and circuits, and output interfaces, devices and circuits. User interface equipment 1432 is configured to allow input of information into WD 1410, and is connected to processing circuitry 1420 to allow processing circuitry 1420 to process the input information. User interface equipment 1432 may include, for example, a microphone, a proximity or other sensor, keys/buttons, a touch display, one or more cameras, a USB port, or other input circuitry. User interface equipment 1432 is also configured to allow output of information from WD 1410, and to allow processing circuitry 1420 to output information from WD 1410. User interface equipment 1432 may include, for example, a speaker, a display, vibrating circuitry, a USB port, a headphone interface, or other output circuitry. Using one or more input and output interfaces, devices, and circuits, of user interface equipment 1432, WD 1410 may communicate with end users and/or the wireless network, and allow them to benefit from the functionality described herein.

Auxiliary equipment 1434 is operable to provide more specific functionality which may not be generally performed by WDs. This may comprise specialized sensors for doing measurements for various purposes, interfaces for additional types of communication such as wired communications etc. The inclusion and type of components of auxiliary equipment 1434 may vary depending on the embodiment and/or scenario.

Power source 1436 may be in the form of a battery or battery pack. Other types of power sources, such as an external power source (e.g., an electricity outlet), photovoltaic devices or power cells, may also be used. WD 1410 may further comprise power circuitry 1437 for delivering power from power source 1436 to the various parts of WD 1410 which need power from power source 1436 to carry out any functionality described or indicated herein. Power circuitry 1437 may in certain embodiments comprise power management circuitry. Power circuitry 1437 may additionally or alternatively be operable to receive power from an external power source; in which case WD 1410 may be connectable to the external power source (such as an electricity outlet) via input circuitry or an interface such as an electrical power cable. Power circuitry 1437 may also in certain embodiments be operable to deliver power from an external power source to power source 1436. This may be, for example, for the charging of power source 1436. Power circuitry 1437 may perform any formatting, converting, or other modification to the power from power source 1436 to make the power suitable for the respective components of WD 1410 to which power is supplied.

Figure 15 illustrates one embodiment of a UE, which does not fall within the scope of the claims, in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 15200 may be any UE identified by the 3^{rd} Generation Partnership Project (3GPP), including a NB-loT UE, a machine type communication (MTC) UE, and/or an enhanced MTC (eMTC) UE. UE 1500, as illustrated in Figure 15, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 15 is a UE, the components discussed herein are equally applicable to a WD, and vice-versa.

In Figure 15, UE 1500 includes processing circuitry 1501 that is operatively coupled to input/output interface 1505, radio frequency (RF) interface 1509, network connection interface 1511, memory 1515 including random access memory (RAM) 1517, read-only memory (ROM) 1519, and storage medium 1521 or the like, communication subsystem 1531, power source 1533, and/or any other component, or any combination thereof. Storage medium 1521 includes operating system 1523, application program 1525, and data 1527. In other embodiments, storage medium 1521 may include other similar types of information. Certain UEs may utilize all of the components shown in Figure 15, or only a subset of the components. The level of integration between the components may vary from one UE to another UE. Further, certain UEs may contain multiple instances of a component, such as multiple processors, memories, transceivers, transmitters, receivers, etc.

In Figure 15, processing circuitry 1501 may be configured to process computer instructions and data. Processing circuitry 1501 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1501 may include two central processing units (CPUs). Data may be information in a form suitable for use by a computer.

In the depicted embodiment, input/output interface 1505 may be configured to provide a communication interface to an input device, output device, or input and output device. UE 1500 may be configured to use an output device via input/output interface 1505. An output device may use the same type of interface port as an input device. For example, a USB port may be used to provide input to and output from UE 1500. The output device may be a speaker, a sound card, a video card, a display, a monitor, a printer, an actuator, an emitter, a smartcard, another output device, or any combination thereof. UE 1500 may be configured to use an input device via input/output interface 1505 to allow a user to capture information into UE 1500. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 15, RF interface 1509 may be configured to provide a communication interface to RF components such as a transmitter, a receiver, and an antenna. Network connection interface 1511 may be configured to provide a communication interface to network 1543a. Network 1543a may encompass wired and/or wireless networks such as a local-area network (LAN), a wide-area network (WAN), a computer network, a wireless network, a telecommunications network, another like network or any combination thereof. For example, network 1543a may comprise a Wi-Fi network. Network connection interface 1511 may be configured to include a receiver and a transmitter interface used to communicate with one or more other devices over a communication network according to one or more communication protocols, such as Ethernet, TCP/IP, SONET, ATM, or the like. Network connection interface 1511 may implement receiver and transmitter functionality appropriate to the communication network links (e.g., optical, electrical, and the like). The transmitter and receiver functions may share circuit components, software or firmware, or alternatively may be implemented separately.

RAM 1517 may be configured to interface via bus 1502 to processing circuitry 1501 to provide storage or caching of data or computer instructions during the execution of software programs such as the operating system, application programs, and device drivers. ROM 1519 may be configured to provide computer instructions or data to processing circuitry 1501. For example, ROM 1519 may be configured to store invariant low-level system code or data for basic system functions such as basic input and output (I/O), startup, or reception of keystrokes from a keyboard that are stored in a non-volatile memory. Storage medium 1521 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1521 may be configured to include operating system 1523, application program 1525 such as a web browser application, a widget or gadget engine or another application, and data file 1527. Storage medium 1521 may store, for use by UE 1500, any of a variety of various operating systems or combinations of operating systems.

Storage medium 1521 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1521 may allow UE 1500 to access computer-executable instructions, application programs or the like, stored on transitory or non-transitory memory media, to off-load data, or to upload data. An article of manufacture, such as one utilizing a communication system may be tangibly embodied in storage medium 1521, which may comprise a device readable medium.

In Figure 15, processing circuitry 1501 may be configured to communicate with network 1543b using communication subsystem 1531. Network 1543a and network 1543b may be the same network or networks or different network or networks. Communication subsystem 1531 may be configured to include one or more transceivers used to communicate with network 1543b. For example, communication subsystem 1531 may be configured to include one or more transceivers used to communicate with one or more remote transceivers of another device capable of wireless communication such as another WD, UE, or base station of a radio access network (RAN) according to one or more communication protocols, such as IEEE 802.15, CDMA, WCDMA, GSM, LTE, UTRAN, WiMax, or the like. Each transceiver may include transmitter 1533 and/or receiver 1535 to implement transmitter or receiver functionality, respectively, appropriate to the RAN links (e.g., frequency allocations and the like). Further, transmitter 1533 and receiver 1535 of each transceiver may share circuit components, software or firmware, or alternatively may be implemented separately.

In the illustrated embodiment, the communication functions of communication subsystem 1531 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1531 may include cellular communication, Wi-Fi communication, Bluetooth communication, and GPS communication. Network 1543b may encompass wired and/or wireless networks such as a local-area network (LAN), a wide-area network (WAN), a computer network, a wireless network, a telecommunications network, another like network or any combination thereof. For example, network 1543b may be a cellular network, a Wi-Fi network, and/or a near-field network. Power source 1513 may be configured to provide alternating current (AC) or direct current (DC) power to components of UE 1500.

The features, benefits and/or functions described herein may be

implemented in one of the components of UE 1500 or partitioned across multiple components of UE 1500. Further, the features, benefits, and/or functions described herein may be implemented in any combination of hardware, software or firmware. In one example, communication subsystem 1531 may be configured to include any of the components described herein. Further, processing circuitry 1501 may be configured to communicate with any of such components over bus 1502. In another example, any of such components may be represented by program instructions stored in memory that when executed by processing circuitry 1501 perform the corresponding functions described herein. In another example, the functionality of any of such components may be partitioned between processing circuitry 1501 and communication subsystem 1531. In another example, the non-computationally intensive functions of any of such components may be implemented in software or firmware and the computationally intensive functions may be implemented in hardware.

Figure 16 is a schematic block diagram illustrating a virtualization environment 1600, which does not fall within the scope of the claims, in which functions may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some variants, which do not fall within the scope of the claims, some or all of the functions described herein may be implemented as virtual components executed by one or more virtual machines implemented in one or more virtual environments 1600 hosted by one or more of hardware nodes 1630. Further, in embodiments in which the virtual node is not a radio access node or does not require radio connectivity (e.g., a core network node), then the network node may be entirely virtualized.

The functions may be implemented by one or more applications 1620 (which may alternatively be called software instances, virtual appliances, network functions, virtual nodes, virtual network functions, etc.) operative to implement some of the features, functions, and/or benefits of some of the embodiments disclosed herein. Applications 1620 are run in virtualization environment 1600 which provides hardware 1630 comprising processing circuitry 1660 and memory 1690. Memory 1690 contains instructions 1695 executable by processing circuitry 1660 whereby application 1620 is operative to provide one or more of the features, benefits, and/or functions disclosed herein.

Virtualization environment 1600, comprises general-purpose or special-purpose network hardware devices 1630 comprising a set of one or more processors or processing circuitry 1660, which may be commercial off-the-shelf (COTS) processors, dedicated Application Specific Integrated Circuits (ASICs), or any other type of processing circuitry including digital or analog hardware components or special purpose processors. Each hardware device may comprise memory 1690-1 which may be non-persistent memory for temporarily storing instructions 1695 or software executed by processing circuitry 1660. Each hardware device may comprise one or more network interface controllers (NICs) 1670, also known as network interface cards, which include physical network interface 1680. Each hardware device may also include non-transitory, persistent, machine-readable storage media 1690-2 having stored therein software 1695 and/or instructions executable by processing circuitry 1660. Software 1695 may include any type of software including software for instantiating one or more virtualization layers 1650 (also referred to as hypervisors), software to execute virtual machines 1640 as well as software allowing it to execute functions, features and/or benefits described in relation with some embodiments described herein.

Virtual machines 1640, comprise virtual processing, virtual memory, virtual networking or interface and virtual storage, and may be run by a corresponding virtualization layer 1650 or hypervisor. Different embodiments of the instance of virtual appliance 1620 may be implemented on one or more of virtual machines 1640, and the implementations may be made in different ways.

During operation, processing circuitry 1660 executes software 1695 to instantiate the hypervisor or virtualization layer 1650, which may sometimes be referred to as a virtual machine monitor (VMM). Virtualization layer 1650 may present a virtual operating platform that appears like networking hardware to virtual machine 1640.

As shown in Figure 16, hardware 1630 may be a standalone network node with generic or specific components. Hardware 1630 may comprise antenna 16225 and may implement some functions via virtualization. Alternatively, hardware 1630 may be part of a larger cluster of hardware (e.g. such as in a data center or customer premise equipment (CPE)) where many hardware nodes work together and are managed via management and orchestration (MANO) 16100, which, among others, oversees lifecycle management of applications 1620.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1640 may be a software implementation of a physical machine that runs programs as if they were executing on a physical, non-virtualized machine. Each of virtual machines 1640, and that part of hardware 1630 that executes that virtual machine, be it hardware dedicated to that virtual machine and/or hardware shared by that virtual machine with others of the virtual machines 1640, forms a separate virtual network elements (VNE).

Still in the context of NFV, Virtual Network Function (VNF) is responsible for handling specific network functions that run in one or more virtual machines 1640 on top of hardware networking infrastructure 1630 and corresponds to application 1620 in Figure 16.

One or more radio units 16200 that each include one or more transmitters 16220 and one or more receivers 16210 may be coupled to one or more antennas 16225. Radio units 16200 may communicate directly with hardware nodes 1630 via one or more appropriate network interfaces and may be used in combination with the virtual components to provide a virtual node with radio capabilities, such as a radio access node or a base station.

In some embodiments, some signalling can be effected with the use of control system 16230 which may alternatively be used for communication between the hardware nodes 1630 and radio units 16200.

Figure 17 illustrates a telecommunication network connected via an intermediate network to a host computer, which does not fall within the scope of the claims. In particular, with reference to FIGURE 17, in accordance with an embodiment, a communication system includes telecommunication network 1710, such as a 3GPP-type cellular network, which comprises access network 1711, such as a radio access network, and core network 1714. Access network 1711 comprises a plurality of base stations 1712a, 1712b, 1712c, such as NBs, eNBs, gNBs or other types of wireless access points, each defining a corresponding coverage area 1713a, 1713b, 1713c. Each base station 1712a, 1712b, 1712c is connectable to core network 1714 over a wired or wireless connection 1715. A first UE 1791 located in coverage area 1713c is configured to wirelessly connect to, or be paged by, the corresponding base station 1712c. A second UE 1792 in coverage area 1713a is wirelessly connectable to the corresponding base station 1712a. While a plurality of UEs 1791, 1792 are illustrated in this example, the disclosed embodiments are equally applicable to a situation where a sole UE is in the coverage area or where a sole UE is connecting to the corresponding base station 1712.

Telecommunication network 1710 is itself connected to host computer 1730, which may be embodied in the hardware and/or software of a standalone server, a cloud-implemented server, a distributed server or as processing resources in a server farm. Host computer 1730 may be under the ownership or control of a service provider, or may be operated by the service provider or on behalf of the service provider. Connections 1721 and 1722 between telecommunication network 1710 and host computer 1730 may extend directly from core network 1714 to host computer 1730 or may go via an optional intermediate network 1720. Intermediate network 1720 may be one of, or a combination of more than one of, a public, private or hosted network; intermediate network 1720, if any, may be a backbone network or the Internet; in particular, intermediate network 1720 may comprise two or more sub-networks (not shown).

The communication system of Figure 17 as a whole enables connectivity between the connected UEs 1791, 1792 and host computer 1730. The connectivity may be described as an over-the-top (OTT) connection 1750. Host computer 1730 and the connected UEs 1791, 1792 are configured to communicate data and/or signaling via OTT connection 1750, using access network 1711, core network 1714, any intermediate network 1720 and possible further infrastructure (not shown) as intermediaries. OTT connection 1750 may be transparent in the sense that the participating communication devices through which OTT connection 1750 passes are unaware of routing of uplink and downlink communications. For example, base station 1712 may not or need not be informed about the past routing of an incoming downlink communication with data originating from host computer 1730 to be forwarded (e.g., handed over) to a connected UE 1791. Similarly, base station 1712 need not be aware of the future routing of an outgoing uplink communication originating from the UE 1791 towards the host computer 1730.

Example implementations, in accordance with an embodiment, of the UE, base station and host computer discussed in the preceding paragraphs will now be described with reference to Figure 18. Figure 18 illustrates host computer communicating via a base station with a user equipment over a partially wireless connection, which does not fall within the scope of the claims. In communication system 1800, host computer 1810 comprises hardware 1815 including communication interface 1816 configured to set up and maintain a wired or wireless connection with an interface of a different communication device of communication system 1800. Host computer 1810 further comprises processing circuitry 1818, which may have storage and/or processing capabilities. In particular, processing circuitry 1818 may comprise one or more programmable processors, application-specific integrated circuits, field programmable gate arrays or combinations of these (not shown) adapted to execute instructions. Host computer 1810 further comprises software 1811, which is stored in or accessible by host computer 1810 and executable by processing circuitry 1818. Software 1811 includes host application 1812. Host application 1812 may be operable to provide a service to a remote user, such as UE 1830 connecting via OTT connection 1850 terminating at UE 1830 and host computer 1810. In providing the service to the remote user, host application 1812 may provide user data which is transmitted using OTT connection 1850.

Communication system 1800 further includes base station 1820 provided in a telecommunication system and comprising hardware 1825 enabling it to communicate with host computer 1810 and with UE 1830. Hardware 1825 may include communication interface 1826 for setting up and maintaining a wired or wireless connection with an interface of a different communication device of communication system 1800, as well as radio interface 1827 for setting up and maintaining at least wireless connection 1870 with UE 1830 located in a coverage area (not shown in Figure 18) served by base station 1820. Communication interface 1826 may be configured to facilitate connection 1860 to host computer 1810. Connection 1860 may be direct or it may pass through a core network (not shown in Figure 18) of the telecommunication system and/or through one or more intermediate networks outside the telecommunication system. In the embodiment shown, hardware 1825 of base station 1820 further includes processing circuitry 1828, which may comprise one or more programmable processors, application-specific integrated circuits, field programmable gate arrays or combinations of these (not shown) adapted to execute instructions. Base station 1820 further has software 1821 stored internally or accessible via an external connection.

Communication system 1800 further includes UE 1830 already referred to. Its hardware 1835 may include radio interface 1837 configured to set up and maintain wireless connection 1870 with a base station serving a coverage area in which UE 1830 is currently located. Hardware 1835 of UE 1830 further includes processing circuitry 1838, which may comprise one or more programmable processors, application-specific integrated circuits, field programmable gate arrays or combinations of these (not shown) adapted to execute instructions. UE 1830 further comprises software 1831, which is stored in or accessible by UE 1830 and executable by processing circuitry 1838. Software 1831 includes client application 1832. Client application 1832 may be operable to provide a service to a human or non-human user via UE 1830, with the support of host computer 1810. In host computer 1810, an executing host application 1812 may communicate with the executing client application 1832 via OTT connection 1850 terminating at UE 1830 and host computer 1810. In providing the service to the user, client application 1832 may receive request data from host application 1812 and provide user data in response to the request data. OTT connection 1850 may transfer both the request data and the user data. Client application 1832 may interact with the user to generate the user data that it provides.

It is noted that host computer 1810, base station 1820 and UE 1830 illustrated in Figure 18 may be similar or identical to host computer 1730, one of base stations 1712a, 1712b, 1712c and one of UEs 1791, 1792 of Figure 17, respectively. This is to say, the inner workings of these entities may be as shown in Figure 18 and independently, the surrounding network topology may be that of Figure 17.

In Figure 18, OTT connection 1850 has been drawn abstractly to illustrate the communication between host computer 1810 and UE 1830 via base station 1820, without explicit reference to any intermediary devices and the precise routing of messages via these devices. Network infrastructure may determine the routing, which it may be configured to hide from UE 1830 or from the service provider operating host computer 1810, or both. While OTT connection 1850 is active, the network infrastructure may further take decisions by which it dynamically changes the routing (e.g., on the basis of load balancing consideration or reconfiguration of the network).

Wireless connection 1870 between UE 1830 and base station 1820 is in accordance with the teachings of the embodiments described throughout this disclosure. One or more of the various embodiments improve the performance of OTT services provided to UE 1830 using OTT connection 1850, in which wireless connection 1870 forms the last segment. More precisely, the teachings of these embodiments may improve signaling overhead and throughput and thereby provide benefits such as reduced user waiting time and relaxed restriction on file size.

A measurement procedure may be provided for the purpose of monitoring data rate, latency and other factors on which the one or more embodiments improve. There may further be an optional network functionality for reconfiguring OTT connection 1850 between host computer 1810 and UE 1830, in response to variations in the measurement results. The measurement procedure and/or the network functionality for reconfiguring OTT connection 1850 may be implemented in software 1811 and hardware 1815 of host computer 1810 or in software 1831 and hardware 1835 of UE 1830, or both. In embodiments, sensors (not shown) may be deployed in or in association with communication devices through which OTT connection 1850 passes; the sensors may participate in the measurement procedure by supplying values of the monitored quantities exemplified above, or supplying values of other physical quantities from which software 1811, 1831 may compute or estimate the monitored quantities. The reconfiguring of OTT connection 1850 may include message format, retransmission settings, preferred routing etc.; the reconfiguring need not affect base station 1820, and it may be unknown or imperceptible to base station 1820. Such procedures and functionalities may be known and practiced in the art. In certain embodiments, measurements may involve proprietary UE signaling facilitating host computer 1810's measurements of throughput, propagation times, latency and the like. The measurements may be implemented in that software 1811 and 1831 causes messages to be transmitted, in particular empty or 'dummy' messages, using OTT connection 1850 while it monitors propagation times, errors etc.

Figure 19 is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 19 will be included in this section. In step 1910, the host computer provides user data. In substep 1911 (which may be optional) of step 1910, the host computer provides the user data by executing a host application. In step 1920, the host computer initiates a transmission carrying the user data to the UE. In step 1930 (which may be optional), the base station transmits to the UE the user data which was carried in the transmission that the host computer initiated, in accordance with the teachings of the embodiments described throughout this disclosure. In step 1940 (which may also be optional), the UE executes a client application associated with the host application executed by the host computer.

Figure 20 is a flowchart illustrating a method implemented in a communication system, in accordance with one embodiment. The communication system includes a host computer, a base station and a UE which may be those described with reference to Figures 17 and 18. For simplicity of the present disclosure, only drawing references to Figure 20 will be included in this section. In step 2010 of the method, the host computer provides user data. In an optional substep (not shown) the host computer provides the user data by executing a host application. In step 2020, the host computer initiates a transmission carrying the user data to the UE. The transmission may pass via the base station, in accordance with the teachings of the embodiments described throughout this disclosure. In step 2030 (which may be optional), the UE receives the user data carried in the transmission.

Figure 21 is a flowchart illustrating a method implemented in a communication system, which does not fall within the scope of the claims. The communication system includes a host computer, a base station and a UE which may be those described with reference to Figures 17 and 18. For simplicity of the present disclosure, only drawing references to Figure 21 will be included in this section. In step 2110 (which may be optional), the UE receives input data provided by the host computer. Additionally or alternatively, in step 2120, the UE provides user data. In substep 2121 (which may be optional) of step 2120, the UE provides the user data by executing a client application. In substep 2111 (which may be optional) of step 2110, the UE executes a client application which provides the user data in reaction to the received input data provided by the host computer. In providing the user data, the executed client application may further consider user input received from the user. Regardless of the specific manner in which the user data was provided, the UE initiates, in substep 2130 (which may be optional), transmission of the user data to the host computer. In step 2140 of the method, the host computer receives the user data transmitted from the UE, in accordance with the teachings of the embodiments described throughout this disclosure.

Figure 22 is a flowchart illustrating a method implemented in a communication system, which does not fall within the scope of the claims. The communication system includes a host computer, a base station and a UE which may be those described with reference to Figures 17 and 18. For simplicity of the present disclosure, only drawing references to Figure 22 will be included in this section. In step 2210 (which may be optional), in accordance with the teachings of the embodiments described throughout this disclosure, the base station receives user data from the UE. In step 2220 (which may be optional), the base station initiates transmission of the received user data to the host computer. In step 2230 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

## Claims

1. A method performed by a wireless device (14-1) configured for use in a wireless communication system (10), the method comprising:
receiving (210) a downlink control information message (20) that indicates changes (22-1, 22-2) in uplink frequency-resource allocations (16-1, 16-2) for respective wireless devices in a group (24), including the wireless device (14-1), wherein the group (24) of wireless devices includes wireless devices whose uplink frequency-resource allocations are collectively contiguous both before and after the changes (22-1, 22-2); and
changing (220) the uplink frequency-resource allocation for the wireless device (14-1) in accordance with the downlink control information message (20).

2. The method of claim 1, wherein an uplink grant stored at the wireless device (14-1) indicates the uplink frequency-resource allocation for the wireless device (14-1) and is configured to periodically recur, and wherein said changing comprises changing the uplink frequency-resource allocation indicated by the stored uplink grant.

3. The method of claim 2, wherein said changing comprises changing the uplink frequency-resource allocation indicated by the stored uplink grant, but maintaining one or more other transmission parameters indicated by the stored uplink grant.

4. The method of any of claims 1-3, further comprising:
before receiving the downlink control information message (20), receiving (205) a configuration message that configures the wireless device (14-1) with a radio network temporary identity, RNTI, that is common to wireless devices in the group (24); and
descrambling (215) cyclic redundancy check (CRC) parity bits of the downlink control information message (20) using the RNTI.

5. The method of any of claims 1-4, further comprising determining the change that the downlink control information indicates in the uplink frequency-resource allocation for the wireless device (14-1), based on:
one or more changes that the downlink control information message (20) indicates in one or more uplink frequency-resource allocations for one or more other wireless devices in the group (24); and
an assumption that the uplink frequency-resource allocations (16-1, 16-2) for the wireless devices in the group (24) are collectively contiguous.

6. The method of any of claims 1-5, further comprising:
performing (230) uplink transmission using the changed uplink frequency-resource allocation; or
performing uplink transmission using the changed uplink frequency-resource allocation after a time at which the changes (22-1, 22-2) indicated by the downlink control information message (20) are valid.

7. A method performed by radio network equipment (12) configured for use in a wireless communication system (10), the method comprising:
transmitting (310) a downlink control information message (20) that indicates changes (22-1, 22-2) in uplink frequency-resource allocations (16-1, 16-2) for respective wireless devices in a group (24), wherein the group (24) of wireless devices includes wireless devices whose uplink frequency-resource allocations are collectively contiguous both before and after the changes (22-1, 22-2).

8. The method of claim 7, wherein the downlink control information message (20) is generated and transmitted after:
determining (306), based on a change in channel conditions experienced by at least one of the wireless devices in the group (24), that the uplink frequency-resource allocation for the at least one wireless device is to be changed; and
determining (308), based on a change in the uplink frequency-resource allocation for the at least one wireless device and on a requirement or preference that uplink frequency-resource allocations for the wireless devices in the group (24) remain collectively contiguous, that the uplink frequency-resource allocation for one or more other wireless devices in the group (24) is to be changed.

9. The method of any of claims 1-8, wherein the downlink control information message (20) indicates:
the change in the uplink frequency-resource allocation for at least one wireless device in the group (24) by indicating a device-specific change that is to be specifically applied by that wireless device;
the changes (22-1, 22-2) in the uplink frequency-resource allocations (16-1, 16-2) for at least two wireless devices in the group (24) by indicating a change that is to be applied by each of the at least two wireless devices, wherein the downlink control information message (20) may include a common shift field that indicates the changes (22-1, 22-2) in the uplink frequency-resource allocations (16-1, 16-2) for the at least two wireless devices by indicating an extent to which each of the uplink frequency-resource allocations for the at least two wireless devices is to be shifted; or
the change in the uplink frequency-resource allocation for at least one wireless device in the group (24) by indicating an extent to which one or both edges of the uplink frequency-resource allocation for the at least one wireless device are to be shifted in frequency.

10. The method of any of claims 1-9,
wherein the downlink control information message (20) explicitly identifies at least one of the wireless devices in the group (24) as being the wireless device that is to apply a certain one of the changes, by indicating an identity of the wireless device and the change that is to be applied by a wireless device with that identity, wherein the identity may be indicated by X bits in the downlink control information message (20), wherein N wireless devices are included in the group (24), and wherein N ≤ 2^{X}; wherein the downlink control information message (20) includes one or more pairs of parameters, each pair including an identity field and an allocation modification indicator field, wherein the identity field of a pair identifies a certain wireless device in the group (24) and the allocation modification indicator field of the pair indicates the change in the uplink frequency-resource allocation for the certain wireless device;
wherein the downlink control information message (20) implicitly identifies at least one of the wireless devices in the group (24) as being the wireless device that is to apply a certain one of the changes, by identifying the uplink frequency-resource allocation for the wireless device and identifying the change that is to be applied to that uplink frequency-resource allocation;
wherein the downlink control information message (20) includes one or more pairs of parameters, each pair including a lower edge shift field and a higher edge shift field, wherein the lower edge shift field and the higher edge shift field of a pair collectively indicate that an uplink frequency-resource allocation with a certain lower edge and certain higher edge is to be changed to having a certain different lower edge and a certain different higher edge;
or
wherein the downlink control information message (20) includes one or more pairs of parameters, each pair including a previous allocation field and an offset field, wherein any uplink frequency-resource allocation with a certain lower edge and certain higher edge as indicated by the previous allocation field of a pair is to be offset in frequency by an extent indicated by the offset field of the same pair.

11. The method of any of claims 1-10, wherein, for each of the uplink frequency-resource allocations (16-1, 16-2), frequency resources allocated by the uplink frequency-resource allocation are contiguous in frequency.

12. A wireless device (14-1, 400, 500) configured for use in a wireless communication system (10), the wireless device (14-1, 400, 500) configured to:
receive a downlink control information message (20) that indicates changes (22-1, 22-2) in uplink frequency-resource allocations (16-1, 16-2) for respective wireless devices in a group (24), including the wireless device (14-1, 400, 500), wherein the group (24) of wireless devices includes wireless devices whose uplink frequency-resource allocations are collectively contiguous both before and after the changes (22-1, 22-2); and
change the uplink frequency-resource allocation for the wireless device (14-1, 400, 500) in accordance with the downlink control information message (20).

13. The wireless device of claim 12, configured to perform the method of any of claims 2-6 and 9-11.

14. Radio network equipment (12) configured for use in a wireless communication system (10), the radio network equipment (12) configured to:
transmitting a downlink control information message (20) that indicates changes (22-1, 22-2) in uplink frequency-resource allocations (16-1, 16-2) for respective wireless devices in a group (24), wherein the group (24) of wireless devices includes wireless devices whose uplink frequency-resource allocations are collectively contiguous both before and after the changes (22-1, 22-2).

15. The radio network equipment of claim 14, configured to perform the method of any of claims 8-11. ,

## Patentansprüche

1. Verfahren, das von einer drahtlosen Vorrichtung (14-1) durchgeführt wird, die zur Verwendung in einem Drahtloskommunikationssystem (10) konfiguriert ist, wobei das Verfahren Folgendes umfasst:
Empfangen (210) einer Downlink-Steuerinformationsnachricht (20), die Änderungen (22-1, 22-2) in Uplink-Frequenzressourcenzuweisungen (16-1, 16-2) für jeweilige drahtlose Vorrichtungen in einer Gruppe (24) angibt, die die drahtlose Vorrichtung (14-1) umfasst, wobei die Gruppe (24) drahtloser Vorrichtungen drahtlose Vorrichtungen umfasst, deren Uplink-Frequenzressourcenzuweisungen sowohl vor als auch nach den Änderungen (22-1, 22-2) kollektiv benachbart sind; und
Ändern (220) der Uplink-Frequenzressourcenzuweisung für die drahtlose Vorrichtung (14-1) gemäß der Downlink-Steuerinformationsnachricht (20).

2. Verfahren nach Anspruch 1, wobei eine an der drahtlosen Vorrichtung (14-1) gespeicherte Uplink-Freigabe die Uplink-Frequenzressourcenzuweisung für die drahtlose Vorrichtung (14-1) anzeigt und so konfiguriert ist, dass sie periodisch wiederkehrt, und wobei das Ändern ein Ändern der durch die gespeicherte Uplink-Freigabe angezeigten Uplink-Frequenzressourcenzuweisung umfasst.

3. Verfahren nach Anspruch 2, wobei das Ändern ein Ändern der durch die gespeicherte Uplink-Freigabe angezeigten Uplink-Frequenzressourcenzuweisung umfasst, aber einen oder mehrere andere durch die gespeicherte Uplink-Freigabe angezeigte Übertragungsparameter aufrechterhält.

4. Verfahren nach einem der Ansprüche 1 bis 3, ferner umfassend:
vor dem Empfangen der Downlink-Steuerinformationsnachricht (20) Empfangen (205) einer Konfigurationsnachricht, die die drahtlose Vorrichtung (14-1) mit einer temporären Funknetzwerkidentität, RNTI, konfiguriert, die den drahtlosen Vorrichtungen in der Gruppe (24) gemeinsam ist; and
Entwürfeln (215) von Paritätsbits einer zyklischen Redundanzprüfung (CRC) der Downlink-Steuerinformationsnachricht (20) unter Verwendung der RNTI.

5. Verfahren nach einem der Ansprüche 1 bis 4, ferner umfassend Bestimmen der Änderung, die die Downlink-Steuerinformationen in der Uplink-Frequenzressourcenzuweisung für die drahtlose Vorrichtung (14-1) anzeigen, basierend auf Folgendem:
einer oder mehreren Änderungen, die die Downlink-Steuerinformationsnachricht (20) in einer oder mehreren Uplink-Frequenzressourcenzuweisungen für eine oder mehrere andere drahtlose Vorrichtungen in der Gruppe (24) anzeigt; und
einer Annahme, dass die Uplink-Frequenzressourcenzuweisungen (16-1, 16-2) für die drahtlosen Vorrichtungen in der Gruppe (24) kollektiv benachbart sind.

6. Verfahren nach einem der Ansprüche 1 bis 5, ferner umfassend:
Durchführen (230) von Uplink-Übertragung unter Verwendung der geänderten Uplink-Frequenzressourcenzuweisung; oder
Durchführen von Uplink-Übertragung unter Verwendung der geänderten Uplink-Frequenzressourcenzuweisung nach einem Zeitpunkt, zu dem die durch die Downlink-Steuerinformationsnachricht (20) angezeigten Änderungen (22-1, 22-2) gültig sind.

7. Verfahren, das von einer Funknetzwerkeinrichtung (12) durchgeführt wird, die zur Verwendung in einem drahtlosen Kommunikationssystem (10) konfiguriert ist, wobei das Verfahren Folgendes umfasst:
Senden (310) einer Downlink-Steuerinformationsnachricht (20), die Änderungen (22-1, 22-2) in Uplink-Frequenzressourcenzuweisungen (16-1, 16-2) für jeweilige drahtlose Vorrichtungen in einer Gruppe (24) anzeigt, wobei die Gruppe (24) drahtloser Vorrichtungen drahtlose Vorrichtungen umfasst, deren Uplink-Frequenzressourcenzuweisungen sowohl vor als auch nach den Änderungen (22-1, 22-2) kollektiv benachbart sind.

8. Verfahren nach Anspruch 7, wobei die Downlink-Steuerinformationsnachricht (20) nach Folgendem erstellt und gesendet wird:
Bestimmen (306) basierend auf einer Änderung in Kanalbedingungen, die von mindestens einer der drahtlosen Vorrichtungen in der Gruppe (24) erfahren wird, dass die Uplink-Frequenzressourcenzuweisung für die mindestens eine drahtlose Vorrichtung geändert werden soll; und
Bestimmen (308), dass die Uplink-Frequenzressourcenzuweisung für eine oder mehrere andere drahtlose Vorrichtungen in der Gruppe (24) geändert werden soll, basierend auf einer Änderung in der Uplink-Frequenzressourcenzuweisung für die mindestens eine drahtlose Vorrichtung und auf einer Anforderung oder Präferenz, dass Uplink-Frequenzressourcenzuweisungen für die drahtlosen Vorrichtungen in der Gruppe (24) kollektiv benachbart bleiben.

9. Verfahren nach einem der Ansprüche 1 bis 8, wobei die Downlink-Steuerinformationsnachricht (20) Folgendes anzeigt:
die Änderung in der Uplink-Frequenzressourcenzuweisung für mindestens eine drahtlose Vorrichtung in der Gruppe (24) durch Anzeigen einer vorrichtungsspezifischen Änderung, die speziell von dieser drahtlosen Vorrichtung angewendet werden soll;
die Änderungen (22-1, 22-2) in den Uplink-Frequenzressourcenzuweisungen (16-1, 16-2) für mindestens zwei drahtlose Vorrichtungen in der Gruppe (24) durch Anzeigen einer Änderung, die von jeder der mindestens zwei drahtlosen Vorrichtungen angewendet werden soll, wobei die Downlink-Steuerinformationsnachricht (20) ein gemeinsames Verschiebungsfeld umfassen kann, das die Änderungen (22-1, 22-2) in den Uplink-Frequenzressourcenzuweisungen (16-1, 16-2) für die mindestens zwei drahtlosen Vorrichtungen durch Anzeigen eines Ausmaßes anzeigt, bis zu dem jede der Uplink-Frequenzressourcenzuweisung für die mindestens zwei drahtlosen Vorrichtungen verschoben werden soll;
oder
die Änderung in der Uplink-Frequenzressourcenzuweisung für mindestens eine drahtlose Vorrichtung in der Gruppe (24) durch Anzeigen eines Ausmaßes, bis zu dem eine oder beide Kanten der Uplink-Frequenzressourcenzuweisung für die mindestens eine drahtlose Vorrichtung in der Frequenz verschoben werden sollen.

10. Verfahren nach einem der Ansprüche 1 bis 9,
wobei die Downlink-Steuerinformationsnachricht (20) mindestens eine der drahtlosen Vorrichtungen in der Gruppe (24) explizit als die drahtlose Vorrichtung identifiziert, die eine bestimmte der Änderungen anwenden soll, indem sie eine Identität der drahtlosen Vorrichtung und die Änderung anzeigt, die von einer drahtlosen Vorrichtung mit dieser Identität angewendet werden soll, wobei die Identität durch X Bits in der Downlink-Steuerinformationsnachricht (20) angezeigt werden kann, wobei N drahtlose Vorrichtungen in der Gruppe (24) umfasst sind und wobei N ≤ 2^{x};
wobei die Downlink-Steuerinformationsnachricht (20) ein oder mehrere Paare von Parametern umfasst, jedes Paar ein Identitätsfeld und ein Zuweisungsmodifikationsindikatorfeld umfasst, wobei das Identitätsfeld eines Paares eine bestimmte drahtlose Vorrichtung in der Gruppe (24) identifiziert und das Zuweisungsmodifikationsindikatorfeld des Paares die Änderung in der Uplink-Frequenzressourcenzuweisung für die bestimmte drahtlose Vorrichtung anzeigt;
wobei die Downlink-Steuerinformationsnachricht (20) implizit mindestens eine der drahtlosen Vorrichtungen in der Gruppe (24) als die drahtlose Vorrichtung identifiziert, die eine bestimmte der Änderungen anwenden soll, indem sie die Uplink-Frequenzressourcenzuweisung für die drahtlose Vorrichtung identifiziert und die Änderung identifiziert, die auf diese Uplink-Frequenzressourcenzuweisung angewendet werden soll;
wobei die Downlink-Steuerinformationsnachricht (20) ein oder mehrere Paare von Parametern umfasst, jedes Paar ein Feld hinsichtlich einer Verschiebung einer unteren Kante und ein Feld hinsichtlich einer Verschiebung einer höhere Kante umfasst, wobei das Feld hinsichtlich der Verschiebung der unteren Kante und das Feld hinsichtlich der Verschiebung der höheren Kante eines Paares kollektiv anzeigen, dass eine Uplink-Frequenzressourcenzuweisung mit einer bestimmten unteren Kante und einer bestimmten höheren Kante so geändert werden soll, dass sie eine bestimmte andere untere Kante und eine bestimmte andere höhere Kante aufweist;
oder
wobei die Downlink-Steuerinformationsnachricht (20) ein oder mehrere Paare von Parametern umfasst, jedes Paar ein Feld hinsichtlich einer vorherigen Zuweisung und ein Offsetfeld umfasst, wobei jede Uplink-Frequenzressourcenzuweisung mit einer bestimmten Unterkante und einer bestimmten Oberkante, wie durch das Feld hinsichtlich der vorherigen Zuweisung eines Paares angezeigt, in der Frequenz um ein durch das Offsetfeld desselben Paares angezeigtes Ausmaß versetzt werden soll.

11. Verfahren nach einem der Ansprüche 1 bis 10, wobei für jede der Uplink-Frequenzressourcenzuweisungen (16-1, 16-2) Frequenzressourcen, die durch die Uplink-Frequenzressourcenzuweisung zugewiesen werden, in der Frequenz benachbart sind.

12. Drahtlose Vorrichtung (14-1, 400, 500), die zur Verwendung in einem Drahtloskommunikationssystem (10) konfiguriert ist, wobei die drahtlose Vorrichtung (14-1, 400, 500) konfiguriert ist zum:
Empfangen einer Downlink-Steuerinformationsnachricht (20), die Änderungen (22-1, 22-2) in Uplink-Frequenzressourcenzuweisungen (16-1, 16-2) für jeweilige drahtlose Vorrichtungen in einer Gruppe (24) angibt, die die drahtlose Vorrichtung (14-1, 400, 500) umfasst, wobei die Gruppe (24) drahtloser Vorrichtungen drahtlose Vorrichtungen umfasst, deren Uplink-Frequenzressourcenzuweisungen sowohl vor als auch nach den Änderungen (22-1, 22-2) kollektiv benachbart sind; und
Ändern der Uplink-Frequenzressourcenzuweisung für die drahtlose Vorrichtung (14-1, 400, 500) gemäß der Downlink-Steuerinformationsnachricht (20).

13. Drahtlose Vorrichtung nach Anspruch 12, konfiguriert zum Durchführen des Verfahrens nach einem der Ansprüche 2 bis 6 und 9 bis 11.

14. Funknetzwerkeinrichtung (12), die zur Verwendung in einem drahtlosen Kommunikationssystem (10) konfiguriert ist, wobei die Funknetzwerkeinrichtung (12) konfiguriert ist zum:
Senden einer Downlink-Steuerinformationsnachricht (20), die Änderungen (22-1, 22-2) in Uplink-Frequenzressourcenzuweisungen (16-1, 16-2) für jeweilige drahtlose Vorrichtungen in einer Gruppe (24) angibt, wobei die Gruppe (24) drahtloser Vorrichtungen drahtlose Vorrichtungen umfasst, deren Uplink-Frequenzressourcenzuweisungen sowohl vor als auch nach den Änderungen (22-1, 22-2) kollektiv benachbart sind.

15. Funknetzwerkeinrichtung nach Anspruch 14, konfiguriert zum Durchführen des Verfahrens nach einem der Ansprüche 8 bis 11.

## Revendications

1. Procédé réalisé par un dispositif sans fil (14-1) configuré pour être utilisé dans un système de communication sans fil (10), le procédé comprenant :
la réception (210) d'un message d'informations de commande de liaison descendante (20) qui indique des changements (22-1, 22-2) d'attributions de ressources de fréquence de liaison montante (16-1, 16-2) pour des dispositifs sans fil respectifs dans un groupe (24), comprenant le dispositif sans fil (14-1), dans lequel le groupe (24) de dispositifs sans fil comprend des dispositifs sans fil dont des attributions de ressources de fréquence de liaison montante sont collectivement contiguës à la fois avant et après les changements (22-1, 22-2) ; et
le changement (220) de l'attribution de ressources de fréquence de liaison montante pour le dispositif sans fil (14-1) en fonction du message d'informations de commande de liaison descendante (20).

2. Procédé selon la revendication 1, dans lequel un octroi de liaison montante stocké au niveau du dispositif sans fil (14-1) indique l'attribution de ressources de fréquence de liaison montante pour le dispositif sans fil (14-1) et est configuré pour se répéter périodiquement, et dans lequel ledit changement comprend le changement de l'attribution de ressources de fréquence de liaison montante indiquée par l'octroi de liaison montante stocké.

3. Procédé selon la revendication 2, dans lequel ledit changement comprend le changement de l'attribution de ressources de fréquence de liaison montante indiquée par l'octroi de liaison montante stocké, mais le maintien d'un ou plusieurs autres paramètres de transmission indiqués par l'octroi de liaison montante stocké.

4. Procédé selon l'une quelconque des revendications 1 à 3, comprenant en outre :
avant la réception du message d'informations de commande de liaison descendante (20), la réception (205) d'un message de configuration qui configure le dispositif sans fil (14-1) avec une identité provisoire de réseau radio, RNTI, qui est commune aux dispositifs sans fil dans le groupe (24) ; et
le désembrouillage (215) de bits de parité de contrôle de redondance cyclique (CRC) du message d'informations de commande de liaison descendante (20) à l'aide de la RNTI.

5. Procédé selon l'une quelconque des revendications 1 à 4, comprenant en outre la détermination du changement que les informations de commande de liaison descendante indiquent dans l'attribution de ressources de fréquence de liaison montante pour le dispositif sans fil (14-1) sur la base de :
un ou plusieurs changements que le message d'informations de commande de liaison descendante (20) indique dans une ou plusieurs attributions de ressources de fréquence de liaison montante pour un ou plusieurs autres dispositifs sans fil dans le groupe (24) ; et
une supposition que les attributions de ressources de fréquence de liaison montante (16-1, 16-2) pour les dispositifs sans fil dans le groupe (24) sont collectivement contiguës.

6. Procédé selon l'une quelconque des revendications 1 à 5, comprenant en outre :
la réalisation (230) d'une transmission de liaison montante à l'aide de l'attribution de ressources de fréquence de liaison montante changée ; ou
la réalisation d'une transmission de liaison montante à l'aide de l'attribution de ressources de fréquence de liaison montante changée après un temps auquel les changements (22-1, 22-2) indiqués par le message d'informations de commande de liaison descendante (20) sont valides.

7. Procédé réalisé par un équipement de réseau radio (12) configuré pour être utilisé dans un système de communication sans fil (10), le procédé comprenant :
la transmission (310) d'un message d'informations de commande de liaison descendante (20) qui indique des changements (22-1, 22-2) d'attributions de ressources de fréquence de liaison montante (16-1, 16-2) pour des dispositifs sans fil respectifs dans un groupe (24), dans lequel le groupe (24) de dispositifs sans fil comprend des dispositifs sans fil dont des attributions de ressources de fréquence de liaison montante sont collectivement contiguës à la fois avant et après les changements (22-1, 22-2).

8. Procédé selon la revendication 7, dans lequel le message d'informations de commande de liaison descendante (20) est généré et transmis après :
la détermination (306), sur la base d'un changement de conditions de canal subi par au moins l'un des dispositifs sans fil dans le groupe (24), que l'attribution de ressources de fréquence de liaison montante pour l'au moins un dispositif sans fil doit être changée ; et
la détermination (308), sur la base d'un changement de l'attribution de ressources de fréquence de liaison montante pour l'au moins un dispositif sans fil et d'une exigence ou d'une préférence que des attributions de ressources de fréquence de liaison montante pour les dispositifs sans fil dans le groupe (24) restent collectivement contiguës, que l'attribution de ressources de fréquence de liaison montante pour un ou plusieurs autres dispositifs sans fil dans le groupe (24) doit être changée.

9. Procédé selon l'une quelconque des revendications 1 à 8, dans lequel le message d'informations de commande de liaison descendante (20) indique :
le changement de l'attribution de ressources de fréquence de liaison montante pour au moins un dispositif sans fil dans le groupe (24) par l'indication d'un changement spécifique au dispositif qui doit être spécifiquement appliqué par ce dispositif sans fil ;
les changements (22-1, 22-2) des attributions de ressources de fréquence de liaison montante (16-1, 16-2) pour au moins deux dispositifs sans fil dans le groupe (24) par l'indication d'un changement qui doit être appliqué par chacun d'au moins deux dispositifs sans fil, dans lequel le message d'informations de commande de liaison descendante (20) peut comprendre un champ de déplacement commun qui indique les changements (22-1, 22-2) des attributions de ressources de fréquence de liaison montante (16-1, 16-2) pour les au moins deux dispositifs sans fil par l'indication d'une mesure dans laquelle chacune des attributions de ressources de fréquence de liaison montante pour les au moins deux dispositifs sans fil doit être déplacée ; ou le changement de l'attribution de ressources de fréquence de liaison montante pour au moins un dispositif sans fil dans le groupe (24) par l'indication d'une mesure dans laquelle un ou les deux bords de l'attribution de ressources de fréquence de liaison montante pour l'au moins dispositif sans fil doivent être déplacés en fréquence.

10. Procédé selon l'une quelconque des revendications 1 à 9,
dans lequel le message d'informations de commande de liaison descendante (20) identifie explicitement au moins l'un des dispositifs sans fil dans le groupe (24) comme étant le dispositif sans fil qui doit appliquer un certain changement parmi les changements, par l'indication d'une identité du dispositif sans fil et du changement qui doit être appliqué par un dispositif sans fil avec cette identité, dans lequel l'identité peut être indiquée par X bits dans le message d'informations de commande de liaison descendante (20), dans lequel N dispositifs sans fil sont compris dans le groupe (24), et dans lequel N ≤ 2^{X} ; dans lequel le message d'informations de commande de liaison descendante (20) comprend une ou plusieurs paires de paramètres, chaque paire comprenant un champ d'identité et un champ d'indicateur de modification d'attribution, dans lequel le champ d'identité d'une paire identifie un certain dispositif sans fil dans le groupe (24) et le champ d'indicateur de modification d'attribution de la paire indique le changement de l'attribution de ressources de fréquence de liaison montante pour le certain dispositif sans fil ;
dans lequel le message d'informations de commande de liaison descendante (20) identifie implicitement au moins l'un des dispositifs sans fil dans le groupe (24) comme étant le dispositif sans fil qui doit appliquer un certain changement parmi les changements, par l'identification de l'attribution de ressources de fréquence de liaison montante pour le dispositif sans fil et l'identification du changement qui doit être appliqué à cette attribution de ressources de fréquence de liaison montante ;
dans lequel le message d'informations de commande de liaison descendante (20) comprend une ou plusieurs paires de paramètres, chaque paire comprenant un champ de déplacement de bord inférieur et un champ de déplacement de bord supérieur, dans lequel le champ de déplacement de bord inférieur et le champ de déplacement de bord supérieur d'une paire indiquent collectivement qu'une attribution de ressources de fréquence de liaison montante avec un certain bord inférieur et un certain bord supérieur doit être changée pour avoir un certain bord inférieur différent et un certain bord supérieur différent ;
ou dans lequel le message d'informations de commande de liaison descendante (20) comprend une ou plusieurs paires de paramètres, chaque paire comprenant un champ d'attribution précédente et un champ de décalage, dans lequel toute attribution de ressources de fréquence de liaison montante avec un certain bord inférieur et un certain bord supérieur comme indiquée par le champ d'attribution précédente d'une paire doit être décalée en fréquence d'une mesure indiquée par le champ de décalage de la même paire.

11. Procédé selon l'une quelconque des revendications 1 à 10, dans lequel, pour chacune des attributions de ressources de fréquence de liaison montante (16-1, 16-2), des ressources de fréquence attribuées par l'attribution de ressources de fréquence de liaison montante sont contiguës en fréquence.

12. Dispositif sans fil (14-1, 400, 500) configuré pour être utilisé dans un système de communication sans fil (10), le dispositif sans fil (14-1, 400, 500) étant configuré pour :
recevoir un message d'informations de commande de liaison descendante (20) qui indique des changements (22-1, 22-2) d'attributions de ressources de fréquence de liaison montante (16-1, 16-2) pour des dispositifs sans fil respectifs dans un groupe (24), comprenant le dispositif sans fil (14-1, 400, 500), dans lequel le groupe (24) de dispositifs sans fil comprend des dispositifs sans fil dont des attributions de ressources de fréquence de liaison montante sont collectivement contiguës à la fois avant et après les changements (22-1, 22-2) ; et
changer l'attribution de ressources de fréquence de liaison montante pour le dispositif sans fil (14-1, 400, 500) en fonction du message d'informations de commande de liaison descendante (20).

13. Dispositif sans fil selon la revendication 12, configuré pour réaliser le procédé selon l'une quelconque des revendications 2 à 6 et 9 à 11.

14. Equipement de réseau radio (12) configuré pour être utilisé dans un système de communication sans fil (10), l'équipement de réseau radio (12) étant configuré pour :
transmettre un message d'informations de commande de liaison descendante (20) qui indique des changements (22-1, 22-2) d'attributions de ressources de fréquence de liaison montante (16-1, 16-2) pour des dispositifs sans fil respectifs dans un groupe (24), dans lequel le groupe (24) de dispositifs sans fil comprend des dispositifs sans fil dont des attributions de ressources de fréquence de liaison montante sont collectivement contiguës à la fois avant et après les changements (22-1, 22-2).

15. Equipement de réseau radio selon la revendication 14, configuré pour réaliser le procédé selon l'une quelconque des revendications 8 à 11.
